(19) Europäisches Patentamt
European Patent Office
Office européen des brevets

(11) **EP 4 177 013 A1**

(12) **EUROPÄISCHE PATENTANMELDUNG**

(43) Veröffentlichungstag:
**10.05.2023 Patentblatt 2023/19**

(21) Anmeldenummer: **21206501.5**

(22) Anmeldetag: **04.11.2021**

(51) Internationale Patentklassifikation (IPC):
**B25J 9/16** (2006.01)   **G06N 3/08** (2023.01)
**G06N 20/00** (2019.01)

(52) Gemeinsame Patentklassifikation (CPC):
**B25J 9/1669; G06N 3/08; G06N 20/00;**
**G06V 10/82;** G05B 2219/39543; G05B 2219/40532;
G05B 2219/40564

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Vathos GmbH**
**40210 Düsseldorf (DE)**

(72) Erfinder: **Balzer, Jonathan**
**40210 Düsseldorf (DE)**

(74) Vertreter: **Schwarz, Claudia**
**Schwarz + Kollegen**
**Patentanwälte**
**Hermann-Schmid-Straße 10**
**80336 München (DE)**

(54) **ANSTEUERUNG EINES INDUSTRIEROBOTERS FÜR EINE GREIFAUFGABE**

(57) In einem Aspekt betrifft die vorliegende Erfindung ein verteiltes System zum Ansteuern zumindest eines Roboters (R) bei einer Greifaufgabe zum Greifen von Objekten (O) unterschiedlicher Objektart, die in einem Arbeitsbereich (FB, B, T) des Roboters (R) angeordnet sind. Das System umfasst einen zentralen Trainingsrechner (ZTR), der zum Vor- und zum Nachtraining ausgebildet ist und zumindest eine lokale Recheneinheit (LRE), auf der reale Bilddaten des Objektes (O) erfasst werden, die zum Erzeugen von Nachtrainingsdaten verwendet werden.

FIG. 1

**Beschreibung**

Die vorliegende Erfindung betrifft ein verteiltes zumindest teilweise computer-implementiertes System zum Ansteuern zumindest eines Roboters bei einer Greifaufgabe zum Greifen von Objekten unterschiedlicher Objektart, ein Betriebsverfahren zum Betreiben eines solchen Systems, einen zentralen Trainingsrechner, ein zentrales Betriebsverfahren zum Betreiben eines zentralen Trainingsrechners, eine lokale Recheneinheit und ein lokales Betriebsverfahren zum Betreiben der lokalen Recheneinheit sowie ein Computerprogramm.

In technischen Produktionssystemen ist es üblich, dass Bauteile, Werkstücke, Werkzeuge und/oder andere Objekte bewegt werden müssen. Dazu werden vollautomatisch agierende Industrieroboter eingesetzt. Der Roboter muss also die Bauteile oder Objekte in seinem Arbeitsbereich erkennen und diese von einem aktuellen Ablageort an einen Zielablageort bringen. Dazu müssen die Objekte gegriffen werden. Für die Greifaufgabe stehen eine Vielzahl von im Stand der Technik bekannten Greifwerkzeugen bzw. Greifern zur Verfügung, wie zum Beispiel Vakuumsauger, induktive Greifer, 2- oder mehr Fingergreifer etc. Je nach Typ des zu greifenden Objektes müssen unterschiedliche Typen von Greifwerkzeugen bestimmt werden, um die Greifaufgabe zu lösen. Beispielsweise erfordert das Greifen einer M6-Schraube der Länge 20 mm einen anderen Greifer als eine geschnittene 800x800mm Metallplatte.

Ein Problem bei im Stand der Technik bekannten Systemen der eingangs genannten Art besteht häufig darin, dass die zu greifenden Objekte nicht systematisch angeordnet sind, sondern - zum Beispiel in einer Kiste - beliebig verteilt sein können. Dies erschwert die Greifaufgabe.

Hat z.B. ein Industrieroboter die Aufgabe, vollautomatisch Teile aus einer Kiste zu entnehmen, so sind die Teile in der Praxis innerhalb der Kiste üblicherweise chaotisch angeordnet und möglicherweise nicht sortenrein. Die entnommenen Teile sollen sortiert, für die weitere Bearbeitung geordnet auf einem Förderband/einer Palette o. ä. abgelegt werden. Alternativ oder kumulativ soll mit ihnen eine Fertigungsmaschine bestückt werden. Ein präziser Griff bedarf einer ebenso präzisen Bestimmung der Lage und Orientierung (und auch einer "Erkennung") des Objektes bzw. der Bauteile auf der Basis von Bildern einer 3D-Kamera, die am Ende des Roboterarms oder über der Kiste montiert sein kann.

Bis zum Einzug datengetriebener Methoden basierte die Erkennung von Objekten in Bildern auf manuell entworfenen Merkmalen ("Features"). Ein Merkmal ist definiert als eine Transformation der rohen Bilddaten in einen niedrig-dimensionalen Raum. Der Entwurf des Merkmals zielt auf ein die Verkleinerung des Suchraums durch das Herausfiltern irrelevanter Inhalte und Störungen ab. Das in dem Dokument Lowe, D.G. Distinctive Image Features from Scale-Invariant Keypoints, International Journal of Computer Vision 60, 91-110 (2004) beschriebene Verfahren ist zum Beispiel invariant gegenüber Skalierung des Bildes, denn für die Erkennung eines Objekts ist es zunächst unerheblich, in welchem Abstand es sich von der Kamera befindet. Solche manuell entworfenen Merkmale sind qualitativ und quantitativ stark auf bestimmte Objektklassen und Umgebungsbedingungen zugeschnitten. Ihre Optimierung auf den konkreten Anwendungsfall erfordert Expertenwissen und schränkt damit die Flexibilität des Anwenders stark ein.

Maschinelle Lernverfahren (so genannte "Künstliche Intelligenz) hingegen sind generisch in dem Sinne, dass sie auf jegliche Objektklassen und Umgebungsbedingungen trainiert werden können, in dem man nur eine ausreichende Anzahl von Daten/Bildern zur Verfügung stellt, die diese Umgebungsbedingungen widerspiegeln. Die Aufnahme von Daten kann auch vom Laien durchgeführt werden, ohne ein jegliches Verständnis (optimaler) Merkmale. Insbesondere so genannte tiefe Lernmethoden ("Deep Learning") lernen neben der Fähigkeit Objekte auf Basis seiner Merkmale zu erkennen auch die optimale Struktur des Merkmals selbst. Diesen Verfahren ist gemeinsam, dass sie ausschließlich auf realen Daten (Bilddaten der zu greifenden Objekte) trainieren. Der Nachteil dieser Verfahren ist darin zu sehen, dass annotierte Trainingsdaten des zu greifenden Objekttyps bereitgestellt werden müssen, was zeit- und arbeitsintensiv ist.

Weiterhin sind Methoden der maschinellen Lernverfahren bekannt, bei denen die Trainingsdaten nicht real gewonnen werden, sondern synthetisch erzeugt werden. Synthetisch generierte Trainingsdaten nach Stand der Technik sind für die hier relevante Greifaufgabe nicht genau genug mangels Realismus der Simulation (der so genannten "Reality Gap" [Tremblay et al. 2018b]). Techniken wie die Randomisierung einzelner Aspekte des simulierten Bildgebungsprozesses sind generisch und bilden die tatsächlichen Umgebungsbedingungen im Einzelfall nur unzureichend nach. wie zum Beispiel in [Kleeberger und Huber 2020b].

Ausgehend von dem genannten Stand der Technik hat sich die vorliegende Erfindung die Aufgabe gestellt, einen Weg aufzuzeigen, mit dem die Greifaufgabe zum Greifen von Objekten in einem industriellen (z.B. Fertigungs-) Prozess für unterschiedliche Objekttypen flexibilisiert und verbessert werden kann. Auch soll der Prozess zum Training des Systems verkürzt werden. Weiterhin soll die Greifaufgabe auch bei unterschiedlichen Objekttypen qualitativ besser ausgeführt werden.

Diese Aufgabe wird durch die beiliegenden, unabhängigen Patentansprüche gelöst, insbesondere durch ein verteiltes zumindest teilweise computer-implementiertes System zum Ansteuern zumindest eines Roboters bei einer Greifaufgabe zum Greifen von Objekten unterschiedlicher Objektart, ein Betriebsverfahren zum Betreiben eines solchen Systems, einen zentralen Trainingsrechner, ein zentrales Betriebsverfahren zum Betreiben eines zentralen Trainingsrechners, eine lokale Recheneinheit und ein lokales Betriebsverfahren zum Betreiben der lokalen Recheneinheit sowie ein Computerprogramm. Vorteilhafte Ausführungsformen, weitere Merkmale und/oder Vorteile finden sich in den Unteransprüchen und in der nachfolgenden Beschreibung der Erfindung.

In einem ersten Aspekt betrifft die vorliegende Erfindung ein verteiltes zumindest teilweise computer-implementiertes System zum Ansteuern zumindest eines Roboters bei einer Greifaufgabe zum Greifen von Objekten unterschiedlicher Objektart (z.B. Schrauben, Werkstücke unterschiedlicher Form und/oder Größe, oder Verpackungen mit oder ohne Inhalt und/oder von Bauteilen eines Produktionssystems), die in einem Arbeitsbereich des Roboters angeordnet sind. Das System umfasst:

- Einen zentralen Trainingsrechner, mit einem Speicher, auf dem eine Instanz eines neuronalen Netzwerk gespeichert ist, wobei der Trainingsrechner zum Vortraining und zum Nachtraining des neuronalen Netzwerks (ANN) bestimmt ist; wobei das ANN zur Objekterkennung und zur Lageerfassung, einschließlich einer Erfassung einer Orientierung des Objektes trainiert wird, um Greifinstruktionen für eine Endeffektoreinheit des Roboters zum Greifen des Objektes zu berechnen; wobei der zentrale Trainingsrechner dazu ausgelegt ist, eine Objektart zu erfassen und wobei der zentrale Trainingsrechner dazu ausgelegt ist, ein Vortraining ausschließlich mit synthetisch erzeugten Objektdaten, die als Vortrainingsdaten dienen, auszuführen, die mittels eines geometrischen, objektart-spezifischen 3D-Modells der Objekte generiert werden und wobei als Ergebnis des Vortrainings Vortrainingsparameter eines vortrainierten ANN über eine Netzwerkschnittstelle an zumindest eine lokale Recheneinheit übermittelt werden und wobei der zentrale Trainingsrechner weiterhin dazu ausgelegt ist, kontinuierlich und zyklisch ein Nachtraining des ANN auszuführen und als Ergebnis des Nachtrainings Nachtrainingsparameter eines nachtrainierten ANN über die Netzwerkschnittstelle an zumindest eine lokale Recheneinheit zu übermitteln;
- Einer Menge von lokalen Ressourcen, die über ein lokales Netzwerk interagieren, umfassend:

    ◦ Den Roboter mit einer Robotersteuerung, einem Manipulator und der Endeffektoreinheit, wobei die Robotersteuerung zur Ansteuerung des Roboters und insbesondere seiner Endeffektoreinheit zur Ausführung der Greifaufgabe für jeweils ein Objekt der jeweiligen Objektart bestimmt ist;
    ◦ Eine optische Erfassungseinrichtung, die zum Erfassen von Bilddaten von Objekten im Arbeitsbereich des Roboters dient;
    ◦ zumindest eine lokale Recheneinheit zur Interkation mit der Robotersteuerung, wobei die zumindest eine lokale Recheneinheit bestimmt ist, unterschiedliche Instanzen des ANN zu speichern, indem die zumindest eine lokale Recheneinheit bestimmt ist, von dem zentralen Trainingsrechner Vortrainingsparameter und Nachtrainingsparameter zu empfangen, um insbesondere ein vortrainiertes ANN zu implementieren, das kontinuierlich und zyklisch durch ein nachtrainiertes ANN ersetzt wird, bis ein Konvergenzkriterium erfüllt ist, und
    ◦ wobei das vortrainierte oder nachtrainierte ANN in einer Inferenzphase auf der lokalen Recheneinheit angewendet wird, indem aus den mit der optischen Erfassungseinrichtung erfassten Bilddaten ein Ergebnisdatensatz bestimmt wird, der dazu dient, die Greifinstruktionen für die Endeffektoreinheit zum Greifen des Objektes zu berechnen und diese an die Robotersteuerung zur Ausführung zu übermitteln;
    ◦ wobei auf der lokalen Recheneinheit ein modifizierter ICP-Algorithmus ausgeführt wird, der als Eingangsdaten erstens die Bilddaten der optischen Erfassungseinrichtung, die dem implementierten ANN zur Anwendung zugeführt wurden und zweitens Referenzbilddaten auswertet und gegeneinander abgleicht, um die Fehler zu minimieren und um einen verfeinerten Ergebnisdatensatz zu erzeugen, wobei die Referenzbilddaten ein (synthetisiertes oder) gerendertes Bild sind, das zu dem vom ANN bestimmten Ergebnisdatensatz auf Basis des 3D-Modells gerendert wird;
    ◦ und wobei der verfeinerte Ergebnisdatensatz als Nachtrainingsdatensatz dient und an den zentralen Trainingsrechner zum Zwecke des Nachtrainings (und zum Erzeugen des Nachtrainingsparameter) übermittelt wird;

- Die Netzwerkschnittstelle zum Datenaustausch zwischen dem zentralen Trainingsrechner und der Menge von lokalen Recheneinheiten, wobei der Datenaustausch über ein asynchrones Protokoll erfolgt.

Das neuronale Netzwerk basiert auf Lernverfahren aus der Klasse der überwachten Lernverfahren. Das neuronale Netzwerk ist trainiert, um einen Anordnungszustand der zu greifenden Objekte (nebeneinander oder teilweise übereinander, überlagert, in einer Kiste oder auf einem Förderband etc.) zu erkennen, so dass das System darauf reagieren kann, indem Greifinstruktionen berechnet werden, die spezifisch für den Anordnungszustand sind. Der Anordnungszustand kennzeichnet sich durch die Art/Klasse/Typ der jeweiligen Objekte (Objektidentifikation), deren Lage (Lagererkennung), deren Orientierung (Erkennung der Orientierung) in Bezug auf den jeweiligen Arbeitsbereich des Roboters. Das System bzw. das Verfahren ermöglicht die sechsdimensionale Lageerkennung und Orientierungserkennung allgemeiner Objekte im Raum und insbesondere im Arbeitsraum des Roboters, der unterschiedliche gestaltet sein kann (Förderband, Kiste, etc.). Das Nachtraining erfolgt kontinuierlich und zyklisch auf Basis von realen Bilddaten der zu greifenden Objekte. Das initiale Training oder Vortraining erfolgt ausschließlich auf Basis von Vortrainingsdaten, nämlich irrealen oder synthetischen Objektdaten, die mittels computergraphischer Methoden (insbesondere einen Synthesealgorithmus) aus dem 3D-Modell zu dem bestimmten Objekttyp erzeugt werden. Die Kommunikation zwischen dem zentralen Trainingsrechner und der zumindest einen lokalen Recheneinheit erfolgt mittels asynchroner Synchronisation. Es sind mehrere Instanzen des neuronalen Netzwerkes vorgesehen und implementiert, die sich durch unterschiedliche Trainingszustände kennzeichnen (vortrainiertes Netz, nachtrainiertes Netz in unterschiedlichen Instanzen).

Das vortrainierte neuronale Netzwerk (kurz auch Netz genannt) erlaubt die Erkennung von Objekten oder Teilen auf Basis realer Bilddaten in einer einfachen Umgebung (ebene Fläche), die weniger anspruchsvoll ist als die Zielumgebung (Kiste). Der Roboter interagiert bereits mit dem Objekt, indem er es an unterschiedlichen Positionen und in unterschiedlichen Orientierungen ablegt oder zumindest die Ablegephase des Zielprozesses ausführt. Dabei werden zusätzliche Trainingsdaten, die Nachtrainingsdaten, gewonnen, diesmal aber unter realistischen Bedingungen. Diese werden über die Netzwerkschnittstelle, insbesondere das WAN, wieder an den zentralen Trainingsrechner übertragen.

Das Training wird kontinuierlich unter Berücksichtigung der realen Bilddaten verbessert durch ein Nachtraining, das auf dem zentralen Trainingsrechner ausgeführt wird und das Ergebnis des Nachtrainings mit den Gewichten wird für die Endanwendung (z.B. Griff in die Kiste) wieder an die mit dem Roboter verbundene lokale Recheneinheit übertragen.

Die hier beschriebene Lösung vereint alle Vorteile eines datengetriebenen Objekterkennungsansatzes, wie eine hohe Zuverlässigkeit und Flexibilität durch einfache Programmierung und/oder Parametrisierung ohne jeglichen Aufwand für die Erzeugung von Trainingsdaten und ohne Genauigkeitseinbußen durch die Diskrepanz zwischen synthetisch generierten Trainingsdaten und der realen Einsatzumgebung.

Das neuronale Netzwerk kann in unterschiedlichen Instanzen gespeichert und/oder implementiert sein und/oder angewendet werden, insbesondere auf der lokalen Recheneinheit. "Instanz" bezieht sich hier auf den Trainingszustand. Eine erste Instanz könnte z.B. ein vortrainierter Zustand sein, eine zweite Instanz ein erster nachtrainierter Zustand, eine dritte Instanz ein zweiter nachtrainierter Zustand, wobei die Nachtrainingsdaten immer auf Basis von real mit der optischen Erfassungseinrichtung erfassten Bilddaten erzeugt werden und die Vortrainingsdaten ausschließlich auf synthetisch erzeugten Objektdaten (die auch gerendert sind und somit auch Bilddaten sind) basieren. Die Instanz bzw. der Zustand ist in den Gewichten und Vor- und Nachtrainingsparametern repräsentiert, die nach jedem Training von dem zentralen Trainingsrechner an die lokalen Recheneinheiten übertragen werden.

Der Arbeitsbereich kann ein Förderband oder eine andere 2-dimensionale Struktur zur Aufnahme oder Lagerung der Objekte sein. Alternativ kann der Arbeitsbereich eine 3-dimensionale Struktur zur Aufnahme oder Lagerung der Objekte sein, wie z.B. eine Kiste sein. Das Objekt kann somit z.B. auf einer Fläche oder in einer Aufbewahrungseinheit, z.B. in einer Kiste, angeordnet sein. Vorzugsweise ist es konfigurierbar, insbesondere über einen Einstellparameter auf einer Benutzeroberfläche, wie dicht die Objekte platziert sind. So ist es insbesondere in einer ersten Analysephase nach Implementierung des vortrainierten ANN möglich, die Objekte disjunkt im Arbeitsbereich zu verteilen. In einer anschließenden Inferenzphase können die Objekte beliebig im Arbeitsbereich verteilt sein und sich auch teilweise überschneiden bzw. überlappen.

Die Greifinstruktionen umfassen zumindest eine Menge von Zielpositionen für die Menge von Endeffektoren, die zur Ausführung der Greifaufgabe bedient werden müssen. Die Greifinstruktionen können zusätzlich noch eine Zeitangabe umfassen, wann welcher Endeffektor mit welchen/m anderen Endeffektor/en synchronisiert aktiviert werden muss, um die Greifaufgabe zu erfüllen, wie z.B. das gemeinsame Halten mit 2- oder Mehr-Fingergreifern.

Das 3D-Modell ist ein dreidimensionales Modell, das die Oberfläche der jeweiligen Objektart kennzeichnet. Es kann ein CAD-Modell sein. Das Format des 3D-Modells ist wählbar und kann durch einen Konvertierungsalgorithmus konvertiert werden, wie z.B. in ein Dreiecksnetz im OBJ-Format, bei dem die Oberfläche des Objekts durch eine Menge von Dreiecken approximiert wird. Das 3D-Modell hat ein (intrinsisches) Koordinatensystem. Die Render Engine, die auf dem zentralen Trainingsrechner installiert ist, kann das intrinsische Koordinatensystem des 3D-Modells in Bezug zu einem Koordinatensystem einer virtuellen Kamera positionieren. Das 3D-Modell wird in einer reinen Simulationsumgebung auf dem zentralen Trainingsrechner positioniert, so dass basierend auf dieser Positionierung von der Render Engine ein Tiefenbild synthetisiert werden kann. Dem so erzeugten Bild (Objektdaten) ist dann als Label die Orientierung und/oder Position des darin abgebildeten Objektes eindeutig zugeordnet.

Objektart meint hier einen Produkttyp also die digitale Spezifikation der Anwendung (z. B. ganz konkret die Frage, welche konkreten Objekte sollen gegriffen werden?). Mit diesem Datensatz kann der zentrale Trainingsrechner dann auf die Datenbank mit den 3D-Modellen zugreifen, um das passende objektart-spezifische 3D-Modell zu laden, also z.B. für Schrauben eines bestimmten Typs, das 3D-Modell dieser Schraubenart. Das geladene 3D-Modell wird insbesondere von einer sogenannten Render Engine (elektronisches Modul auf dem zentralen Trainingsrechner) in alle physikalisch plausiblen bzw. physikalisch möglichen Lagen und/oder Orientierungen gebracht. Vorzugsweise ist auf dem zentralen Trainingsrechner eine Render Engine implementiert. Dabei werden von einem Synthesealgorithmus geometrische Randbedingungen des Objektes, wie Größe, Schwerpunkt, Masse und/oder Freiheitsgrade etc. berücksichtigt. Danach wird ein Bild gerendert und ein Tiefenpuffer wird als synthetisiertes Datenobjekt zusammen mit den Labels (Lage und Orientierung, evtl. optional Klasse) des im Bild abgebildeten bzw. repräsentierten Objektes abgespeichert (quasi als synthetisiertes Bild). Das derart synthetisierte Bild dient in einer Menge von entsprechend erzeugten Bildern als Vortrainingsdaten, die zum Vortraining des neuronalen Netzwerkes auf dem zentralen Trainingsrechner verwendet werden.

Die Vortrainingsdaten werden somit in einem automatischen, algorithmischen Verfahren (Synthesealgorithmus) aus dem zur bestimmten Objektart passenden bzw. objektart-spezifischen 3D-Modell erzeugt, das in einem Modellspeicher gespeichert ist. Bei den Objektdaten kann es sich insbesondere um Bilder handeln. Zum Vortraining müssen somit keine realen Bilddaten der zu greifenden Objekte erfasst werden und an den zentralen Trainingsrechner übertragen werden. Das Vortraining kann somit vorteilhafterweise autark auf dem zentralen Trainingsrechner ausgeführt werden. Die Vortrainingsdaten sind ausschließlich Objektdaten, die mittels des Synthesealgorithmus synthetisiert wurden.

Das Nachtraining dient zum Nachtraining bzw. der Verbesserung des maschinellen Lernmodells mit real erfassten Bilddaten, die auf der lokalen Recheneinheit von den realen Objekten im Arbeitsbereich des Roboters erfasst worden sind. Die Nachtrainingsdaten sind mittels eines Annotationsalgorithmus auf Basis von erzeugten Referenzbilddaten annotiert bzw. mit einem Label versehen ("gelabelt"). Bei den Nachtrainingsdaten handelt es sich somit insbesondere um annotierte Bilddaten, basierend auf realen Bilddaten, die mit der optischen Erfassungseinrichtung lokal erfasst worden sind. Zum Nachtraining werden zunächst die Gewichte des ANNs aus dem Vortraining geladen. Ausgehend davon wird ein stochastisches Gradientenabstiegsverfahren über die Nachtrainingsdaten fortgesetzt. Das Fehlerfunktional sowie der Gradient werden über die Menge aller Trainingsdatenpunkte berechnet. Dabei beeinflussen die Größe und die Eigenschaften der Eingangsdaten die Lage des globalen Minimus und somit auch die Gewichte (bzw. Parameter) des ANN. Insbesondere werden dort, wo RGB-Bilder existieren, sechs (6) Koordinaten (Lage des Punktes und 3 Farbkanäle) in das Inputlayer des ANN eingespeist. Ansonsten werden drei (3) Koordinaten in das Inputlayer des ANN eingespeist.

Das Nachtraining erfolgt zyklisch. Im Betrieb werden kontinuierlich Nachtrainingsdaten, basierend auf realen Bilddaten, erfasst. Je mehr reale Bilddaten und somit Nachtrainingsdaten vorhanden sind, desto weniger synthetische Daten (Objektdaten) benötigt das Verfahren. Das Verhältnis synthetische Daten/reale Bilddaten wird kontinuierlich verringert, bis keine synthetischen Daten mehr im Nachtrainingsdatensatz vorhanden sind

Nach Abschluss des Vortrainings und/oder des Nachtrainings auf dem zentralen Trainingsrechner werden Vortrainingsparameter und/oder Nachtrainingsparameter mit Gewichten für das neuronale Netzwerk erzeugt (beim Nachtraining können bestehende Gewichten beibehalten oder angepasst werden). Ein wichtiger technischer Vorteil ist darin zu sehen, dass nur die Gewichte in Form der Vortrainingsparameter und/oder Nachtrainingsparameter von dem zentralen Trainingsrechner an die lokale Recheneinheit übertragen werden müssen, was eine Übertragung in komprimierter Form zur Folge hat und hilft, Netzwerkressourcen einzusparen.

Die Endeffektoreinheit kann an einem Manipulator des Roboters angeordnet sein, der z.B. als Roboterarm ausgebildet sein kann, um die Endeffektoren zu tragen. Möglich sind Manipulatoren mit unterschiedlich ausgeprägten Kinematiken (6-Achs-Roboter mit 6 Freiheitsgraden, Lineareinheit mit nur 3 translatorischen Freiheitsgraden etc.). Die Endeffektoreinheit kann mehrere und dabei auch unterschiedliche Endeffektoren umfassen.

Ein Endeffektor kann z.B. als Vakuumsauger bzw. als pneumatischer Greifer ausgebildet sein. Alternativ oder kumulativ können magnetische, mechanische und/oder adhäsive Greifer zum Einsatz kommen. Es können zur Ausführung einer koordinierten Greifaufgabe auch mehrere Endeffektoren gleichzeitig aktiviert werden. Die Endeffekttoreinheit kann einen oder mehrere Endeffektoren umfassen, wie zum Beispiel 2- oder 3-Fingergreifer und/oder Saugnapfgreifer.

Die lokale Recheneinheit kann z.B. als Edge Device ausgebildet sein. Das neuronale Netzwerk ("artificial neuronal network", ANN) und/oder die Software mit den Algorithmen (z.B. modifizierter ICP, automatisches Verfahren zum Labeln der Kamerabilder etc.) kann mit der Hardware als Embedded Device bereitgestellt werden.

Die lokale Recheneinheit ist ausgebildet, mit der Robotersteuerung zu interagieren, insbesondere, um Daten mit der Steuerung des Roboters auszutauschen. Insofern steuert die lokale Recheneinheit den Roboter zumindest indirekt, indem sie die Robotersteuerung entsprechend anweist. Die lokalen Ressourcen umfassen somit zwei unterschiedliche Steuerungen: zum einen die Robotersteuerung (am Industrieroboter) und zum anderen die lokale Recheneinheit, insbesondere einem Edge Device, was insbesondere eingerichtet ist, die lokal erfassten Bilder auszuwerten. Die Robotersteuerung fragt bei der lokalen Recheneinheit die Lage der Objekte ab, um damit dann den Roboter "anzusteuern". Die Robotersteuerung hat insofern Kontrolle über die lokale Recheneinheit. Das Edge Device steuert den Roboter indirekt.

Der modifizierte ICP-Algorithmus dient vorwiegend dazu, Annotationen zu den Ergebnisdaten des neuronalen Netzwerks als Referenzbilddaten bereitzustellen, um eine externe Bewertung des maschinellen Ergebnisses zu ermöglichen. Die Modifikation des klassischen ICP-Algorithmus besteht darin, dass zwischen den Iterationen des Algorithmus nicht nur die Korrespondenzen (in Form nächster Nachbarn) neu berechnet werden, sondern auch eine der beiden Punktewolken durch Rendern eines Tiefenbilds des Modells aus der aktuell geschätzten relativen Lage/Orientierung von Modell und Kamera. Das dabei zu minimierende Fehlermaß errechnet sich aus den Abständen korrespondierender Punkte im Raum, wobei die Korrespondenzen in jeder Iteration auch auf Basis kürzester Abstände bestimmt werden. Das Henne-Ei-Problem wird eben durch die iterative Ausführung gelöst (ähnlich zu dem hier beschriebenen Konzept eines iterativen Trainings).

In der Inferenz wird aus dem erfassten Bilddaten, in dem das zu greifenden Objekt abgebildet ist, ein Ergebnisdatensatz mit den Labels ermittelt, insbesondere Lage und Orientierung des Objektes im Arbeitsbereich und optional die Klasse. Der Ergebnisdatensatz ist ein Zwischenergebnis.

Auf den Ergebnisdatensatz wird der modifizierte ICP-Algorithmus angewendet, um einen verfeinerten Ergebnisdatensatz zu berechnen, der als Endergebnis dient. Das Endergebnis wird zum einen an die Robotersteuerung und zum anderen zum Zwecke des Nachtrainings an den zentralen Trainingsrechner übermittelt.

Unter einer "Recheneinheit" oder einem "Rechner" kann im Zusammenhang mit der Erfindung beispielsweise eine Maschine oder eine elektronische Schaltung verstanden werden. Das Verfahren wird dann "embedded" ausgeführt. Insbesondere das lokale Betriebsverfahren kann eng gekoppelt sein an die Robotersteuerung des Roboters. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Der Begriff "Ergebnisdatensatz" bzw. "verfeinerter Ergebnisdatensatz" bezieht sich auf einen Datensatz, in dem Labels, also insbesondere die Lage und/oder die Orientierung bzw. Position und fakultativ die Objektart (z.B. Schraube, Werkstückplatte) des Objektes codiert ist. Auf Basis des (verfeinerten) Ergebnisdatensatzes können die Greifinstruktionen berechnet werden.

Das Berechnen der Greifinstruktionen erfolgt im Wesentlichen durch eine Reihe von Koordinatentransformationen: Griff = Transformationsmatrix von Greifer- nach Objektkoordinaten $F_{GO}$, erkannte Objektlage/Orientierung = Transformation von Objekt- zu Roboterkoordinaten $F_{OR}$. Gesucht wird die Transformation von Greifer- zur Roboterkoordinaten $F_{GR} = F_{GO} * F_{OR}$, wobei G den Greifer, O das Objekt, R die Roboterkoordinaten repräsentieren.

Greifinstruktionen können von der Robotersteuerung verarbeitet werden, um den Roboter mit seinen Endeffektoren zum Ausführen der objektartspezifischen Greifaufgabe anzusteuern. Dazu muss der (verfeinerte) Ergebnisdatensatz mit einem Griff bzw. Greifpositionen "kombiniert" werden. Der Griff für das jeweilige Objekt wird als Datensatz vom zentralen Trainingsrechner an die lokale Recheneinheit übertragen. Der Griff codiert die intendierte relative Position und/oder Orientierung des Greifers relativ zum zu greifenden Objekt. Dieser Zusammenhang (Position/Orientierung Greifer - Position/Orientierung Objekt) wird vorteilhafterweise unabhängig von der Lage und/oder Position des Objektes im Raum berechnet (Koordinatentransformation).

In einer bevorzugten Ausführungsform der Erfindung berechnet die lokale Recheneinheit "nur" die Ziellage und/oder Orientierung des Endeffektors für den Griff. Dieser Datensatz wird an die Robotersteuerung übergeben. Die Robotersteuerung berechnet eine Bahn, um den Endeffektor aus dem aktuellen Zustand in den Zielzustand zu bringen und rechnet diese mittels inverser Kinematik in Achswinkel um.

In einer bevorzugten Ausführungsform der Erfindung dient die Netzwerkschnittstelle dazu, Parameter (Gewichte), insbesondere Vortrainingsparameter und/oder Nachtrainingsparameter zur Instanziierung des vortrainierten oder nachtrainierten ANNs von dem zentralen Rechner an die zumindest eine lokale Recheneinheit zu übermitteln. Alternativ oder kumulativ kann die Netzwerkschnittstelle dazu dienen, den auf der zumindest einen lokalen Recheneinheit erzeugten verfeinerten Ergebnisdatensatz als Nachtrainingsdatensatz an den zentralen Trainingsrechner zum Nachtraining zu übermitteln. Alternativ oder kumulativ kann die Netzwerkschnittstelle dazu dienen, das geometrische, objektart-spezifischen 3D-Modell auf der lokalen Recheneinheit zu laden. Dies kann über die Benutzerschnittstelle getriggert werden, z.B. durch die Auswahl einer bestimmten Objektart. Das 3D-Modell, z.B. ein CAD-Modell, kann von einem Modellspeicher oder von dem zentralen Trainingsrechner geladen werden.

In einer weiteren bevorzugten Ausführungsform der Erfindung können auf der lokalen Recheneinheit aus den mit der optischen Erfassungseinrichtung lokal erfassten Bilddaten, die dem ANN zur Auswertung zugeführt wurden und den synthetisierten Referenzbilddaten in einem automatischen Verfahren, nämlich einem Annotationsalgorithmus, gelabelte bzw. annotierte Nachtrainingsdaten erzeugt werden, die zum Zwecke des Nachtrainings an den zentralen Trainingsrechner übermittelt werden. Der modifizierte ICP-Algorithmus gleicht unter Ausnutzung starker geometrischer Randbedingungen die Schwächen des (nur) vortrainierten Netzes aus. Die real und lokal erfassten Bilder werden zusammen mit den verfeinerten Detektionen (verfeinerter Ergebnisdatensatz = Ergebnis des modifizierten ICP-Algorithmus = Labels) an den zentralen Trainingsrechner übermittelt.

In einer weiteren bevorzugten Ausführungsform der Erfindung weist das System eine Benutzerschnittstelle auf. Die Benutzerschnittstelle kann als Applikation (App) und/oder als Webinterface ausgebildet sein, über die eine API alle für das Verfahren relevanten Daten zwischen dem zentralen Trainingsrechner und dem Actor austauscht. Insbesondere wird zunächst das 3D-Modell spezifiziert und übergeben und in dem Modellspeicher gespeichert. Die Benutzerschnittstelle ist dazu bestimmt, zumindest ein Auswahlfeld bereitzustellen, um eine Objektart der zu greifenden Objekte zu bestimmen. Dies kann als Triggersignal ausgewertet werden, um die bestimmte Objektart an den zentralen Trainingsrechner zu übermitteln, so dass der zentrale Trainingsrechner in Antwort auf die bestimmte Objektart das objektart-spezifische 3D-Modell aus einem Modellspeicher lädt, um mittels eines Synthesealgorithmus, objektart-spezifische Bilder in allen physikalisch plausiblen Lagen und/oder Orientierungen zu synthetisieren, die das als Grundlage für das Vortraining des neuronalen Netzwerks dienen. Der Synthesealgorithmus verarbeitet mechanische und/oder physikalische Daten der Objektart wie Schwerpunkt, Größe und/oder stabile Lagedaten, um nur physikalisch plausible Lagen und/oder Orientierungen des Objektes zu rendern. Es sollen somit nur die Objektdaten gerendert werden, die das Objekt in physikalisch möglichen Positionen darstellen. Physikalisch mögliche Positionen sind insbesondere die berechneten stabile Lagen. Eine instabile Lage (z.B. Schraube steht nicht auf der Spitze) wird nicht gerendert. Dies hat den Vorteil, dass Rechenkapazität eingespart werden kann und unnötige Datenspeicherungen und Datenverarbeitungen vermieden werden können.t

Das neuronale Netzwerk ist trainiert, um zumindest zu einem (Tiefen-)Bild (alternativ: kumulativ zu einem RGB-Bild) von einem Objekt einer Objektart eine Objekterkennung und eine Positionserfassung des Objektes im Koordinatensystem des Arbeitsbereiches des Roboters, einschließlich einer Erfassung der Orientierung des Objektes - als Ergebnisdatensatz - auszugeben. Vorzugsweise kann das neuronale Netzwerkzusätzlich trainiert sein, um eine Zuverlässigkeit der Ausgabe in Form eines Zuverlässigkeitsdatensatzes bereitzustellen. Das neuronale Netzwerkkann als tiefes Netz ("deep neural network" oder DNN) ausgebildet sein. Das neuronale Netzwerkkann verstanden werden als eine Funktionsapproximation/Regression:

$$f \, (Bild) = Lage/Orientierung/optional: Klasse \, (Label),$$

wobei *f(Bild)* eindeutig durch die Parameter/Gewichte des Netzes definiert ist, es besteht also eine implizite Abhängigkeit von den Parametern, d.h., *f=f (Bild; Parameter).* Training bedeutet nichts anderes als eine gewisse Verlustfunktion über die Menge der Parameter/Gewichte zu minimieren:

$$Parameter = argmin \, loss(f(Bild_{bekannt}) - Label_{bekannt})),$$

so dass man später mittels f auch einen sinnvollen Output $Label_{unbekannt}$ für einen Input $Bild_{unbekannt}$ bekommt.

Das neuronale Netzwerkkann eine Votenet Architektur aufweisen. Für weitere Details zum Votenet sei auf die Publikation C. R. Qi, O. Litany, K. He and L. Guibas, "Deep Hough Voting for 3D Object Detection in Point Clouds," 2019 IEEE/CVF International Conference on Computer Vision (ICCV), 2019, pp. 9276-9285 verwiesen. Das Votenet umfasst insbesondere drei Module: erstens ein Backbone zum Lernen von lokalen Merkmalen, zweitens einem Auswertemodul zur Auswertung und/oder Akkumulation der einzelnen Merkmalsvektoren und drittens ein Umwandlungsmodul, das dazu bestimmt ist, ein Ergebnis der Akkumulation in Objektdetektionen umzuwandeln.

In einer weiteren bevorzugten Ausführungsform der Erfindung kann die Netzwerkschnittstelle Synchronisationsmittel mit einem Broker umfassen, der als Microservice implementiert ist (z.B. RabbitMQ). Der Vorteil dieser Lösung ist, dass das System auch angewendet werden kann, wenn zwischen den lokalen Ressourcen und dem zentralen Trainingsrechner aktuell keine Netzwerkverbindung vorhanden ist. Damit kann die lokale Recheneinheit im Bereich des Roboters auch autark und insbesondere unabhängig von dem zentralen Trainingsrechner ausgeführt werden. Nachdem die Parameter zur Implementierung des neuronalen Netzwerksauf die lokale Recheneinheit geladen worden sind, kann die lokale Recheneinheit autark prozessieren.

In einer weiteren bevorzugten Ausführungsform der Erfindung kann der Datenaustausch zwischen den lokalen Ressourcen und dem zentralen Trainingsrechner ausschließlich über die lokale Recheneinheit erfolgen, die als Gateway dient. Die lokale Recheneinheit fungiert also zum einen als Gateway, zum anderen führt sie auch alle "Transaktionen" durch, weil sie als einzige Instanz beide Interaktionspartner bzw. Seiten "erreichen" kann, sowohl die zentrale Recheneinheit als auch sich selbst bzw. die Module oder Einheiten der lokalen Ressourcen. Die lokale Recheneinheit bzw. das Edge Device im lokalen Netzwerk ist für Anwendungen in der Cloud in der Regel ohne technischen Mehraufwand (z.B. ein VPN) nicht erreichbar.

In einer weiteren bevorzugten Ausführungsform der Erfindung können die Greifinstruktionen einen Identifikationsdatensatz umfassen, der dazu dient, zumindest einen für das Objekt geeigneten Endeffektor aus einer Menge von Endeffektoren der Endeffektoreinheit zu identifizieren. Die auf der lokalen Recheneinheit erzeugten Greifinstruktionen beinhalten "nur" die Ziellage und/oder Orientierung des Endeffektors für den Griff. Die Greifinstruktionen werden dann auf der Robotersteuerung weiterprozessiert, um eine Bahn zu berechnen, um den Endeffektor aus dem aktuellen Zustand in den Zielzustand zu bringen. Die Robotersteuerung rechnet diese mittels inverser Kinematik in Achswinkel um. Dem System kann vorzugsweise sogenanntes "Prozesswissen", also Daten, die den Anwendungsfall des robotischen Prozesses definieren, zugeführt werden. Das Prozesswissen umfasst unter anderem den Identifikationsdatensatz, der den Typ des Greifers indiziert und der insbesondere vor der Berechnung der Greifposition und/oder Orientierung eingelesen wird (Ein Vakuumgreifer greift ja anders als ein 2 Fingergreifer). Das Prozesswissen kann in einem Bewegungsprogramm implementiert sein, welches auf der Robotersteuerung läuft.

Funktioniert aber genauso, wie Sie es schreiben. Der Roboter bekommt auch die Klasse von uns und kann abhängig davon einen Greifer auswählen.

In einer weiteren bevorzugten Ausführungsform der Erfindung umfasst die optische Erfassungseinrichtung eine Einrichtung zur Erfassung von Tiefenbildern und optional zur Erfassung von Intensitätsbildern im sichtbaren oder im Infrarotspektrum. Die Intensitätsbilder können vorzugsweise zur Verifikation der Tiefenbilder verwendet werden. Damit kann die Güte des Verfahrens verbessert werden. Die Erfassungsreinrichtung zur Erfassung der Tiefenbilder und der Intensitätsbilder kann in einer gemeinsamen Einrichtung implementiert sein. Typischerweise sind Tiefen- und Intensitätskamera integriert in einer Vorrichtung. Das Tiefenbild wird in allen gängigen Messprinzipien aus einem oder mehreren Intensitätsbildern berechnet, z.B. mittels eines Streifenprojektionsverfahrens.

In einer weiteren bevorzugten Ausführungsform der Erfindung können die berechneten Greifinstruktionen einem Visualisierungsalgorithmus zugeführt werden, der dazu dient, eine virtualisierte Visualisierung der Greifinstruktionen zu berechnen, die die bestimmten Greifer beim Greifen des Objektes zeigen, wobei die berechnete virtualisierte Visualisierung der Greifinstruktionen auf einer Benutzerschnittstelle ausgegeben wird. Über die Ausgabe der virtualisierten Darstellung wird es möglich, eine manuelle Verifikation auszuführen, um z.B. falsche Griffe aufgrund einer falsch bestimmten Objektart und ein nachfolgend falsches Training zu vermeiden. Insbesondere ist in einer bevorzugten Ausführungsform der Erfindung eine Visualisierung des Griffs (Greifer relativ zum Objekt) implementiert, damit die Zuverlässigkeit der Erkennung vor der Inbetriebnahme überprüft werden kann. Im Betrieb und während der Aufnahme von Daten für das Nachtraining kann diese Visualisierung allerdings entfallen oder ist optional. Die Visualisierung wird auf einer Benutzerschnittstelle ausgegeben, die den lokalen Ressourcen in der Umgebung des Roboters zugeordnet ist.

In einer weiteren bevorzugten Ausführungsform der Erfindung wird das Nachtraining des neuronalen Netzwerks iterativ und zyklisch im Anschluss an eine Übertragung von Nachtrainingsdaten in Form von verfeinerten Ergebnisdatensätzen ausgeführt, die lokal von der optischen Erfassungseinrichtung erfasste Bilddaten umfassen, die automatisch annotiert sind und die von der lokalen Recheneinheit an den zentralen Trainingsrechner übermittelt worden sind. Damit wird das Nachtraining zwar auf dem zentralen Trainingsrechner ausgeführt, aber die Nachtrainingsdaten dafür werden auf der lokalen Recheneinheit akkumuliert und zwar aus real erfassten Bilddaten von den realen Objekten im Arbeitsbereich des Roboters. Das Nachtraining ermöglicht somit ein spezifisches Nachtraining in Bezug auf die jeweilige Objektart. Auch wenn das Vortraining bereits auf die Objektart bezogen war durch die Bestimmung des 3D-Modells, können die aktuell zu greifenden Objekte innerhalb der Objektart noch differieren, wie z.B. Schrauben können ein anders Gewinde und/oder eine unterschiedliche Länge aufweisen.

In einer weiteren bevorzugten Ausführungsform der Erfindung wird der Nachtrainingsdatensatz zum Nachtraining des neuronalen Netzwerks schrittweise und kontinuierlich erweitert durch sensorisch lokal an den lokalen Ressourcen des Roboters erfasste Bilddaten.

Vorstehend wurde die Lösung der Aufgabe anhand des Systems, also für eine Vorrichtung, beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die verfahrensbasierten Ansprüche (die beispielsweise auf ein zentrales Betriebsverfahren und auf ein lokales Verfahren oder auf ein Computerprogramm gerichtet sind) mit den Merkmalen weitergebildet sein, die in Zusammenhang mit dem System beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem System beschriebenen bevorzugten Ausführungsform der Erfindung werden nicht explizit für das Verfahren wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Speichern" von Daten mit einer Speichereinheit und entsprechenden Anweisungen zum Schreiben von Daten in den Speicher durchgeführt werden. Um Redundanz zu vermeiden, wird das Verfahren deshalb nicht noch einmal explizit beschrieben, obwohl es auch in den alternativen Ausführungsformen, die in Bezug auf das System beschrieben sind, verwendet werden kann.

In einem weiteren Aspekt betrifft die Erfindung ein Betriebsverfahren zum Betreiben eines Systems nach einem der vorangehenden Ansprüche, mit folgenden Verfahrensschritten:

- Auf dem zentralen Trainingsrechner: Einlesen einer Objektart;
- Auf dem zentralen Trainingsrechner: Zugreifen auf einen Modellspeicher, um das für die erfasste Objektart zugeordnete 3D-Modell, insbesondere CAD-Modell, zu laden und daraus, insbesondere mit einem Synthesealgorithmus, synthetische Objektdaten zu erzeugen und zum Zwecke des Vortrainings zu verwenden;
- Auf dem zentralen Trainingsrechner: Vortraining eines neuronalen Netzwerkes mit den synthetischen Objektdaten;
- Auf dem zentralen Trainingsrechner: Bereitstellen von Vortrainingsparametern;
- Auf dem zentralen Trainingsrechner: Übermitteln der Vortrainingsparameter über die Netzwerkschnittstelle an die zumindest eine lokale Recheneinheit;
- Auf der zumindest einen lokalen Recheneinheit: Einlesen von Vortrainingsparametern oder Nachtrainingsparametern eines vortrainierten oder nachtrainierten ANN über die Netzwerkschnittstelle, um das vortrainierte oder nachtrainierte ANN zu implementieren;
- Auf der zumindest einen lokalen Recheneinheit: Erfassen von (realen) Bilddaten von realen Objekten im Arbeitsbereich des Roboters;
- Auf der zumindest einen lokalen Recheneinheit: Anwenden des vortrainierten oder nachtrainierten ANNs mit den erfassten Bilddaten, um den Ergebnisdatensatz zu bestimmen;
- Auf der zumindest einen lokalen Recheneinheit: Ausführen eines modifizierten ICP-Algorithmus, der als Eingangsdaten erstens die Bilddaten der optischen Erfassungseinrichtung, die dem implementierten ANN zur Anwendung zugeführt wurden und zweitens Referenzbilddaten auswertet und gegeneinander abgleicht, um die Fehler zu minimieren und, um einen verfeinerten Ergebnisdatensatz zu erzeugen, wobei die Referenzbilddaten ein synthetisiertes und/oder gerendertes Bild sind, das zu dem vom ANN bestimmten Ergebnisdatensatz auf Basis des 3D-Modells gerendert wird;
- Auf der zumindest einen lokalen Recheneinheit: Berechnen von Greifinstruktionen für die Endeffektoreinheit des Roboters auf Basis des erzeugten verfeinerten Ergebnisdatensatzes;
- Auf der zumindest einen lokalen Recheneinheit: Datenaustausch mit der Robotersteuerung zur Instruktion der Robotersteuerung, damit diese die Endeffektoreinheit des Roboters ansteuern kann auf Basis der erzeugten Greifinstruktionen;
- Auf der zumindest einen lokalen Recheneinheit: Erzeugen von Nachtrainingsdaten wobei der verfeinerte Ergebnisdatensatz als Nachtrainingsdatensatz dient und an den zentralen Trainingsrechner zum Zwecke des Nachtrainings (und dementsprechend zum Erzeugen der Nachtrainingsparameter) übermittelt wird. Der Ablauf zum Erzeugen von realen Trainingsdaten ist wie folgt:

    1. Aufnahme zumindest eines Tiefenbilds, optional eines mit dem Tiefenbild registrierten Intensitätsbildes;

    2. Auswertung des Tiefenbilds (nach dem ersten Nachtraining des Tiefen- und Intensitätsbilds) durch das ANN. Ergebnis sind die Klasse der Objekte, deren Lagen, deren Orientierungen. Das Zwischenergebnis ist eine "Detektion" aller im Bild sichtbaren Objekte.

    3. Verfeinerung des Ergebnisses, das von dem ANN bereitgestellt wird, mittels eines modifizierten ICP-Algorithmus.

- Auf dem zentralen Trainingsrechner: Erfassen von Nachtrainingsdaten über die Netzwerkschnittstelle, wobei die Nachtrainingsdaten die gelabelten bzw. annotierten realen Bilddaten umfassen, die mit der optischen Erfassungseinrichtung erfasst worden sind;
- Auf dem zentralen Trainingsrechner: Kontinuierliches und zyklisches Nachtraining des neuronalen Netzwerksmit den erfassten Nachtrainingsdaten bis ein Konvergenzkriterium erfüllt ist zum Bereitstellen von Nachtrainingsparametern;
- Auf dem zentralen Trainingsrechner: Übermitteln der Nachtrainingsparameter über die Netzwerkschnittstelle an die zumindest eine lokale Recheneinheit.

In einem weiteren Aspekt bezieht sich die Erfindung auf ein zentrales Betriebsverfahren zum Betreiben eines zentralen Trainingsrechners in einem System, wie vorstehend beschrieben. Das zentrale Betriebsverfahren korrespondiert mit dem System und entspricht einer Hardwarelösung, während das Verfahren die Softwareimplementierung repräsentiert. Das Verfahren umfasst die folgenden Verfahrensschritte:

- Einlesen einer Objektart;
- Zugreifen auf den Modellspeicher, um das für die erfasste Objektart zugeordnete 3D-Modell, insbesondere CAD-Modell, zu laden und daraus, insbesondere mit einem Synthesealgorithmus, synthetische Objektdaten zu erzeugen und zum Zwecke des Vortrainings zu verwenden;

- Vortraining eines neuronalen Netzwerkes mit den erzeugten synthetischen Objektdaten zum Bereitstellen von Vortrainingsparametern,
- Übermitteln der Vortrainingsparameter über die Netzwerkschnittstelle an die zumindest eine lokale Recheneinheit;
- Erfassen von Nachtrainingsdaten über die Netzwerkschnittstelle, wobei die Nachtrainingsdaten einen verfeinerten Ergebnisdatensatz umfassen, auf Basis von mit der optischen Erfassungseinrichtung real erfassten Bilddaten von Objekten im Arbeitsbereich des Roboters, die in einem automatischen Verfahren auf der lokalen Recheneinheit annotiert worden sind;
- Kontinuierliches und zyklisches Nachtraining des neuronalen Netzwerksmit den erfassten Nachtrainingsdaten bis ein Konvergenzkriterium erfüllt ist zum Bereitstellen von Nachtrainingsparametern;
- Übermitteln der Nachtrainingsparameter über die Netzwerkschnittstelle an die zumindest eine lokale Recheneinheit.

Vorzugsweise werden die Schritte Erfassen von Nachtrainingsdaten, Nachtraining und Übermitteln der Nachtrainingsparameter iterativ auf Basis von neu erfassten Nachtrainingsdaten ausgeführt. Dies macht es möglich, dass das das System bzw. Verfahren zur Objektdetektion (was (Klasse)?, Lage?, Orientierung?) zum automatischen Erzeugen von Greifinstruktionen kontinuierlich verbessert wird.

In einem weiteren Aspekt betrifft die Erfindung ein lokales Betriebsverfahren zum Betreiben von lokalen Recheneinheiten in einem System, wie vorstehend beschrieben, mit folgenden Verfahrensschritten:

- Einlesen von Vortrainingsparametern oder Nachtrainingsparametern eines vortrainierten oder nachtrainierten ANN über die Netzwerkschnittstelle, um das vortrainierte oder nachtrainierte ANN zu implementieren;
- Erfassen von Bilddaten mit der optischen Erfassungseinrichtung von den Objekten im Arbeitsbereich;
- Anwenden des vortrainierten oder nachtrainierten ANNs mit den erfassten Bilddaten, um den jeweiligen Ergebnisdatensatz für die in den Bilddaten abgebildeten Objekte bereitzustellen;
- Ausführen eines modifizierten ICP-Algorithmus, der als Eingangsdaten erstens die Bilddaten der optischen Erfassungseinrichtung, die dem implementierten ANN zur Anwendung zugeführt wurden und zweitens Referenzbilddaten auswertet und gegeneinander abgleicht, um die Fehler zu minimieren und um einen verfeinerten Ergebnisdatensatz zu erzeugen, wobei die Referenzbilddaten ein synthetisiertes und gerendertes Bild sind, das zu dem vom ANN bestimmten Ergebnisdatensatz auf Basis des 3D-Modells gerendert wird;
- Übermitteln des verfeinerten Ergebnisdatensatzes an den zentralen Trainingsrechner;
- Berechnen von Greifinstruktionen zur Anwendung auf der Endeffektoreinheit des Roboters auf Basis des erzeugten verfeinerten Ergebnisdatensatzes;
- Datenaustausch mit der Robotersteuerung zum Ansteuern der Endeffektoreinheit des Roboters mit den erzeugten Greifinstruktionen.

In einer bevorzugten Ausführungsform der Erfindung wird in dem eben beschriebenen lokalen Betriebsverfahren das Erfassen der Bilddaten für das jeweilige Objekt vor der Ausführung der Greifinstruktionen des Objektes ausgelöst. Alternativ kann das Erfassen der Bilddaten auch während des Greifens bereits erkannter Objekte ausgeführt werden. Das Endergebnis in Form des verfeinerten Ergebnisdatensatzes wird dem Roboter bzw. seiner Steuerung für das Ausführen der Greifinstruktion übermittelt und gleichzeitig oder parallel oder zeitversetzt an den zentralen Trainingsrechner übermittelt. Der Upload der Bilddaten läuft vorzugsweise parallel zum Primärprozess (Ansteuerung des Roboters). Durch die geschickte Vergabe von Identifikatoren können Bilddaten und Label/Annotationen in dem zentralen Trainingsrechner später wieder miteinander assoziiert werden: Für jedes erfasste Bild (mittels der Kamera) wird eine eindeutige Identifikationsnummer erzeugt. Jedes in einer Tabelle einer Datenbank gespeicherte Label enthält eine Referenz auf das dazugehörige Bild in Form der Bild-ID.

Beispielsweise können die Objekte in der Trainingsphase ohne Einhaltung von Restriktionsbedingungen und insbesondere in einer Kiste und teilweise überlagert angeordnet sein, aus der sie mittels der Endeffektoren gegriffen werden sollen. Bei jedem Griff werden automatisch Bilddaten erfasst, die als Trainingsdaten dienen. Die Trainingsdaten werden bei diesem Verfahren somit automatisch erzeugt.

In einer bevorzugten Ausführungsform der Erfindung können bei Anwendung des vortrainierten ANN in einer Vortrainingsphase die Objekte unter Einhaltung von Restriktionsbedingungen (also vereinfacht), insbesondere auf einer Ebene und disjunkt in dem Arbeitsbereich, angeordnet sind. In späteren Stadien, insbesondere bei Anwendung des nachtrainierten ANN können die Objekte in dem Arbeitsbereich ohne Einhaltung von Restriktionsbedingungen angeordnet sein (also durchaus komplex, z.B. überlappend, sich teilweise verdeckend, schief etc.).

In einem weiteren Aspekt bezieht sich die Erfindung auf einen zentralen Trainingsrechner, wie vorstehend beschrieben, mit einem Speicher, auf dem eine Instanz eines neuronalen Netzwerkes gespeichert ist, wobei der Trainingsrechner zum Vortraining und zum Nachtraining des neuronalen Netzwerksbestimmt ist, das zur Objekterkennung und zur Lageerfassung, einschließlich einer Erfassung einer Orientierung des Objektes trainiert ist, um Greifinstruktionen für eine Endeffektoreinheit des Roboters zum Greifen des Objektes zu berechnen;

- wobei der zentrale Trainingsrechner dazu ausgelegt ist, eine Objektart zu einzulesen und

- wobei der zentrale Trainingsrechner eine Modellschnittstelle zu einem Modellspeicher aufweist, in dem zu jeweils einer Objektart ein geometrisches 3D-Modell der Objekte der Objektart hinterlegt ist und

- wobei der zentrale Trainingsrechner dazu ausgelegt ist, ein Vortraining ausschließlich mit synthetisch erzeugten Objektdaten, die als Vortrainingsdaten dienen, auszuführen, die mittels des geometrischen, objektart-spezifischen 3D-Modells der Objekte der erfassten Objektart generiert werden und wobei als Ergebnis des Vortrainings Vortrainingsparameter eines vortrainierten neuronalen Netzwerkes (ANN) über eine Netzwerkschnittstelle an zumindest eine lokale Recheneinheit übermittelt werden und

- wobei der zentrale Trainingsrechner weiterhin dazu ausgelegt ist, kontinuierlich und zyklisch ein Nachtraining des neuronalen Netzwerksauf Basis von Nachtrainingsdaten auszuführen und als Ergebnis des Nachtrainings Nachtrainingsparameter eines nachtrainierten ANN über die Netzwerkschnittstelle an die zumindest eine lokale Recheneinheit zu übermitteln.

In einem weiteren Aspekt betrifft die Erfindung eine lokale Recheneinheit in einem verteilten System, wie vorstehend beschrieben, wobei die lokale Recheneinheit zum Datenaustausch mit einer Steuerung des Roboters zum Ansteuern des Roboters und insbesondere seiner Endeffektoreinheit zur Ausführung der Greifaufgabe für jeweils ein Objekt bestimmt ist, und

- wobei lokale Recheneinheit bestimmt ist, unterschiedliche Instanzen des neuronalen Netzwerks zu speichern, indem die lokale Recheneinheit bestimmt ist von dem zentralen Trainingsrechner Vortrainingsparameter und Nachtrainingsparameter zu empfangen, um insbesondere ein vortrainiertes ANN zu implementieren, das kontinuierlich und zyklisch durch ein nachtrainiertes ANN ersetzt wird, bis ein Konvergenzkriterium erfüllt ist, und

- wobei das vortrainierte oder nachtrainierte ANN in einer Inferenzphase angewendet wird, indem zu den mit der optischen Erfassungseinrichtung erfassten Bilddaten, ein Ergebnisdatensatz bestimmt wird,

- und wobei ein modifizierter ICP-Algorithmus ausgeführt wird, der als Eingangsdaten erstens die Bilddaten der optischen Erfassungseinrichtung, die dem implementierten ANN zur Anwendung zugeführt wurden und zweitens Referenzbilddaten auswertet und gegeneinander abgleicht, um die Fehler zu minimieren und um einen verfeinerten Ergebnisdatensatz zu erzeugen, wobei die Referenzbilddaten ein synthetisiertes oder gerendertes Bild sind, das zu dem vom ANN bestimmten Ergebnisdatensatz auf Basis des 3D-Modells gerendert wird und wobei der verfeinerte Ergebnisdatensatz als Grundlage dient, die Greifinstruktionen für die Endeffektoreinheit zum Greifen des Objektes zu berechnen und diese an die Robotersteuerung des Roboters zur Ausführung der Greifaufgabe zu übermitteln.

In einer bevorzugten Ausführungsform der Erfindung umfasst die lokale Recheneinheit eine Graphics Processing Unit (GPU), die dazu dient, das neuronale Netzwerk zu implementieren. Mit anderen Worten kann das Betriebsverfahren zur Ausführung auf der lokalen Recheneinheit auf der GPU ausgeführt werden.

In einem weiteren Aspekt betrifft die Erfindung ein Computerprogramm, wobei das Computerprogramm in eine Speichereinheit einer Recheneinheit ladbar ist und Programmcodeabschnitte enthält, um die Recheneinheit zu veranlassen, das Verfahren wie vorstehend beschrieben, auszuführen, wenn das Computerprogramm in der lokalen Recheneinheit ausgeführt wird. Bei der Recheneinheit kann es sich um den zentralen Trainingsrechner zur Ausführung des zentralen Betriebsverfahrens oder um die lokale Recheneinheit zur Ausführung des lokalen Betriebsverfahrens handeln.

In einem weiteren Aspekt betrifft die Erfindung ein Computerprogrammprodukt. Das Computerprogrammprodukt kann auf einem Datenträger oder einem computerlesbaren Speichermedium gespeichert sein.

In der folgenden detaillierten Figurenbeschreibung werden nicht einschränkend zu verstehende Ausführungsbeispiele mit deren Merkmalen und weiteren Vorteilen anhand der Zeichnung besprochen.

**Kurze Beschreibung der Figuren**

Fig. 1 ein Interaktionsdiagramm, das den Datenaustausch zwischen den beteiligten Instanzen eines Systems gemäß einer bevorzugten Ausführungsform der Erfindung zeigt;

Fig. 2 eine schematische Darstellung der datentechnischen Verbindung zwischen den beteiligten zentralen und lokalen Instanzen;

Fig. 3 eine schematische Darstellung eines zentralen Trainingsrechners in Kommunikation mit einer Menge von lokalen Recheneinheiten;

Fig. 4     eine weitere schematische Darstellung eines Greifvorganges des Roboters beim Greifen eines Objektes mit den berechneten Greifinstruktionen;

Fig. 5     eine weitere schematische Darstellung eines Greifvorganges des Roboters beim Greifen von Objekten in einer komplexeren Anordnung im Arbeitsbereich, insbesondere in einer Kiste;

Fig. 6     eine weitere schematische Darstellung eines Greifvorganges des Roboters beim Greifen von Objekten und beim Sortieren der gegriffenen Objekte, insbesondere beim Sortieren in eine Kiste;

Fig. 7     ein Ablaufdiagramm eines Betriebsverfahrens zur Ausführung auf einem System;

Fig. 8     ein Ablaufdiagramm eines zentralen Betriebsverfahrens zur Ausführung auf einem zentralen Trainingsrechner;

Fig. 9     ein Ablaufdiagramm eines lokalen Betriebsverfahrens zur Ausführung auf einer lokalen Recheneinheit;

Fig. 10    eine beispielhafte bevorzugte Implementierung es neuronalen Netzwerkes als Votenet-Architektur;

Fig. 11    schematische Darstellung eines Synchronisationsmechanismus zum asynchronen Nachrichtenaustausch zwischen dem zentralen Trainingsrechner ZTR und der jeweiligen lokalen Recheneinheit LRE;

Fig. 12    UML Diagramm zum Betrieb des Systems, insbesondere während der Inferenz;

Fig. 13    UML Diagramm zum Training des Systems;

Fig. 14    eine beispielhafte Darstellung eines Roboterarms mit einer Endeffektoreinheit bestehend aus 4 Vakuumgreifern und

Fig. 15    eine beispielhafte Darstellung eines 2 Fingergreifers.

## Detaillierte Beschreibung der Figuren

Die Erfindung betrifft das computerimplementierte Ansteuern eines Industrieroboters bei einer Greifaufgabe zum Greifen von Objekten unterschiedlicher Objektart, wie zum Beispiel von Schrauben, Werkstücken oder Zwischenprodukten im Rahmen eines Produktionsprozesses.

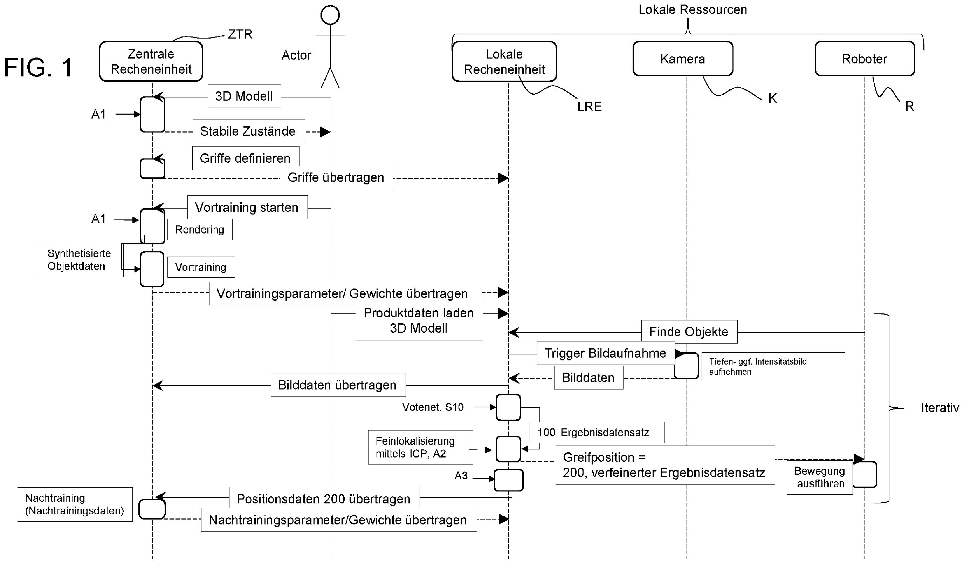

In **Figur 1** ist ein Interaktionsdiagramm zum Datenaustausch zwischen unterschiedlichen elektronischen Einheiten zum Ausführen der oben genannten Greifaufgabe gezeigt. In einer bevorzugten Ausführungsform umfasst das System einen zentralen Trainingsrechner ZTR und eine Menge von lokalen Ressourcen. "Lokal" meint hier im Umfeld des Roboters, also lokal am Roboter angeordnet. Die lokalen Ressourcen können zumindest eine lokale Recheneinheit LRE, zumindest eine optische Erfassungseinrichtung K und einen Roboter R mit einer Robotersteuerung RS umfassen.

Die lokalen Ressourcen stehen in Datenaustausch über ein lokales Netzwerk, insbesondere ein drahtloses Netzwerk, zum Beispiel ein Funknetzwerk. Die lokalen Ressourcen sind über ein WAN Netzwerk (Wide Area Network, zum Beispiel das Internet) mit dem zentralen Trainingsrechner ZTR verbunden.

In einer bevorzugten Ausführungsform ist das System mit einer Benutzerschnittstelle UI ausgebildet, über die ein Anwender, in Figur 1 Aktor genannt, mit dem System interagieren kann.

Das Verfahren kann ausgelöst werden, indem auf der Benutzerschnittstelle UI eine Objektart bzw. ein bestimmter Objekttyp eingegeben wird (zum Beispiel Schrauben). Nach Erfassen dieses Objektart-Datensatzes auf der Benutzerschnittstelle UI, die als Applikation/App oder Browser basiert ausgebildet sein kann, wird der Objektart-Datensatz an den zentralen Trainingsrechner ZTR übermittelt. In Antwort auf die erfassten Objektart Daten wird auf den zentralen Trainingsrechner ZTR das passende 3D-Modell (zum Beispiel als CAD-Modell) geladen. Auf dem zentralen Trainingsrechner ZTR kann anschließend ein Synthesealgorithmus A1 ausgeführt werden, um - basierend auf den geladenen 3D-Modell - Bilder in ausgewählten Laden und/oder Orientierungen zu synthetisieren bzw. zu rendern. Der Synthesealgorithmus A1 ist ausgelegt, die Bilder in alle physikalisch plausiblen Lagen und/oder Orientierungen zu bringen, die physikalisch möglich sind. Dabei wird insbesondere der Schwerpunkt des Objektes, dessen Größe und/oder der jeweilige Arbeitsbereich berücksichtigt. Weitere technische Details zum Synthesealgorithmus werden weiter unten erläutert.

Der Synthesealgorithmus A1 dient dazu, stabile Zustände des jeweiligen Objektes bildlich darzustellen und Objektdaten zu synthetisieren, die die alleinige Grundlage (Input) für das Vortraining des neuronalen Netzwerks sind.

Auf der Benutzerschnittstelle UI können weiterhin Griffe definiert werden, die in Form eines Griffdatensatzes an den zentralen Trainingsrechner ZTR übermittelt werden. Nach Ausführung des Synthesealgorithmus A1 werden ausschließlich synthetisch erzeugte Vortrainingsdaten bereitgestellt. Die so erzeugten Vortrainingsdaten, die ausschließlich auf CAD-Modelldaten für den spezifischen Objekttyp basieren, werden dann zum Vortraining eines neuronalen Netzwerks (Artificial Neural Network) ANN verwendet. Nach Abschluss des Vortrainings mit den Vortrainingsdaten, können Gewichte des Netzwerks ANN bereitgestellt werden, mit denen es möglich wird, das neuronalen Netzwerk ANN zu implementieren. Die Gerichte werden an die lokale Recheneinheit LRE übertragen. Des Weiteren wird auf der lokalen Recheneinheit LRE auch das 3D-Modell der bestimmten Objektart geladen. Daraufhin kann auf der lokalen Recheneinheit LRE das vortrainierte neuronale Netzwerk ANN implementiert werden.

Daraufhin kann auf der lokalen Recheneinheit LRE ein Annotationsverfahren auf Basis von real erfassten Bilddaten bd, die mit der optischen Erfassungseinrichtung und insbesondere mit der Kamera K erfasst worden sind, ausgeführt werden. Das Annotationsverfahren dient zum Erzeugen von Nachtrainingsdaten, die zum Nachtraining an den zentralen Trainingsrechner übermittelt werden. Das Training, Vor- oder Nachtraining, erfolgt ausschließlich auf dem zentralen Trainingsrechner. Die Datenaggregation zum Nachtraining wird allerdings auf der lokalen Recheneinheit LRE ausgeführt.

Dazu können auf den lokalen Ressourcen folgende Verfahrensschritte iterativ ausgeführt werden. Die Robotersteuerung RS triggert das Verfahren durch ein Initialisierungssignal, das an die lokale Rechnereinheit LRE gesendet wird. Die lokale Rechneinheit LRE veranlasst daraufhin die Auslösung einer Bildaufnahme durch die Kamera K. Die Kamera K ist vorzugsweise so eingerichtet, dass sie den Arbeitsbereich FB, B, T des Roboters R erfassen kann. Die Kamera K kann zur Erfassung von Tiefenbildern und gegebenenfalls von Intensitätsbildern ausgelegt sein. Die real vom Objekt O erfassten Bilddaten bd werden von der Kamera K an die lokale Rechneinheit LRE übermittelt, um dort, also auf der lokalen Rechneinheit LRE ausgewertet zu werden. Dies erfolgt über Anwendung des zuvor implementierten neuronalen Netzwerkes ANN. Nach Einspeisung der Bilddaten bd in das neuronalen Netzwerk ANN wird ein Ergebnisdatensatz 100 ausgegeben. Der Ergebnisdatensatz 100 ist ein Zwischenergebnis und umfasst Annotationen zu dem in den Bilddaten bd abgebildeten Objekt O. Die Annotationen können auch als Label bezeichnet werden und umfassen einen Lage Erfassungsdatensatz und einen Orientierung Datensatz und optional eine Art bzw. eine Klasse des jeweiligen Objektes O.

Nachdem das Zwischenergebnis aus dem neuronalen Netzwerk ANN bereitgestellt werden kann, wird ein modifizierter ICP Algorithmus A2 zur Feinlokalisierung angewendet. Das Ergebnis des modifizierten ICP Algorithmus A2 dient als Endergebnis und ist in einem verfeinerten Ergebnisdatensatz 200 repräsentiert und verbessert bzw. verfeinert das Zwischenergebnis, das aus der neuronalen Netzwerkberechnung stammt. Aus diesem verfeinerten Ergebnisdatensatz 200 können dann die Greifinstruktionen mit den konkreten Greifpositionen berechnet werden. Die greift Instruktionen können zur Ausführung an die Robotersteuerung RS übertragen werden, damit diese die Bewegungsplanung einer Endeffektoreinheit EE berechnen kann. Daraufhin kann die Robotersteuerung RS den Roboter R veranlassen, die Bewegung auszuführen.

Parallel zu diesem Vorgang werden die von der Kamera K erfassten Bilddaten bd von der lokalen Recheneinheit LRE an den zentralen Trainingsrechner ZTR zum Zwecke des Nachtrainings übermittelt. Ebenso werden die Endergebnisdaten mit dem verfeinerten Ergebnis Datensatz 200 zum Zwecke des Nachtrainings von der lokalen Recheneinheit LRE an den zentralen Trainingsrechner ZTR übertragen.

Daraufhin kann auf dem zentralen Trainingsrechner ZTR ein Nachtraining des neuronalen Netzwerks ANN ausgeführt werden. Das Nachtraining basiert somit auf real von der Kamera K erfassten Bilddaten, in denen das zu greifende Objekt O repräsentiert ist. Als Ergebnis des Nachtrainings werden Nachtrainingsparameter in Form von veränderten Gewichten g' bereitgestellt. Die Nachtrainingsparameter g' werden von dem zentralen Trainingsrechner ZTR an die lokale Recheneinheit LRE übermittelt, sodass auf der lokalen Recheneinheit LRE das nachtrainierte neuronalen Netzwerk ANN implementiert und angewendet werden kann.

Der vorstehend beschriebene Vorgang "Bilderfassung - Anwendung des neuronalen Netzwerks ANN - Ausführung des modifizierten ICP Algorithmus A2 - Übertragen der Bilddaten bd und Ausführen des Nachtrainings auf dem zentralen Trainingsrechner ZTR - Übertragen von Nachtrainingsparametern g'" können iterativ oder zyklisch so lange wiederholt werden, bis ein Konvergenzkriterium erfüllt ist und das neuronalen Netzwerk ANN möglichst optimal auf das zu greifende Objekt abgestimmt ist.

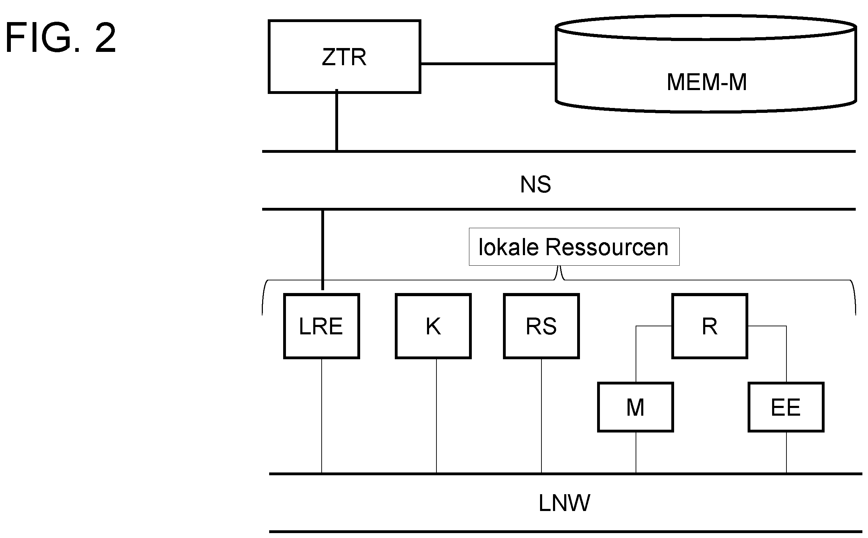

**Figur 2** zeigt in einer weiteren schematischen Darstellung die strukturelle Anordnung der Beteiligten elektronischen Komponenten gemäß einer bevorzugten Ausführungsform der Erfindung. Der zentrale Trainingsrechner ZTR interagiert über eine Netzwerkschnittstelle NS mit den lokalen Ressourcen, umfassend die lokale Recheneinheit LRE, zumindest eine Kamera K, die Robotersteuerung RS und den Roboter R mit einem Manipulator M und einer Menge von Endeffektoren, wie z.B. Greifern. Die lokalen Ressourcen interagieren über ein lokales Netzwerk LNW. In einer alternativen Ausführungsform der Erfindung kann die Robotersteuerung RS auch direkt über die Netzwerkschnittstelle NS Daten mit dem zentralen Trainingsrechner austauschen, sofern sie über einen HTTPS-Client verfügt. Bevorzugt ist jedoch die "getunnelte" Kommunikation über das asynchrone Protokoll über die lokale Recheneinheit LRE. Dies hat den Vorteil, dass das System und damit die Produktion betriebsfähig bleibt, insbesondere auch dann, wenn die Internetverbindung vorübergehend nicht verfügbar ist oder nicht in ausreichender Qualität verfügbar ist.

Deswegen erfolgt die Kommunikation in der Regel über die lokale Recheneinheit LRE. Sie fungiert sozusagen als Cache, da sie mit dem zentralen Trainingsrechner ZTR Daten asynchron austauschen kann, wann immer eine Verbindung besteht. Außerdem kann man auf der lokalen Recheneinheit LRE leicht Dienste laufen lassen, die es ermöglichen, dass jede Robotersteuerung RS mit anderen Instanzen und so auch mit dem zentralen Trainingsrechner ZTR oder anderen lokalen Ressourcen sprechen (Daten austauschen) kann, nicht nur die, die über einen HTTP- oder gar HTTPS-Client verfügen. In dieser vorteilhaften Ausführungsform der Erfindung ist eine Übersetzungs-App auf dem Edge Device bzw. der lokalen Recheneinheit LRE installiert.

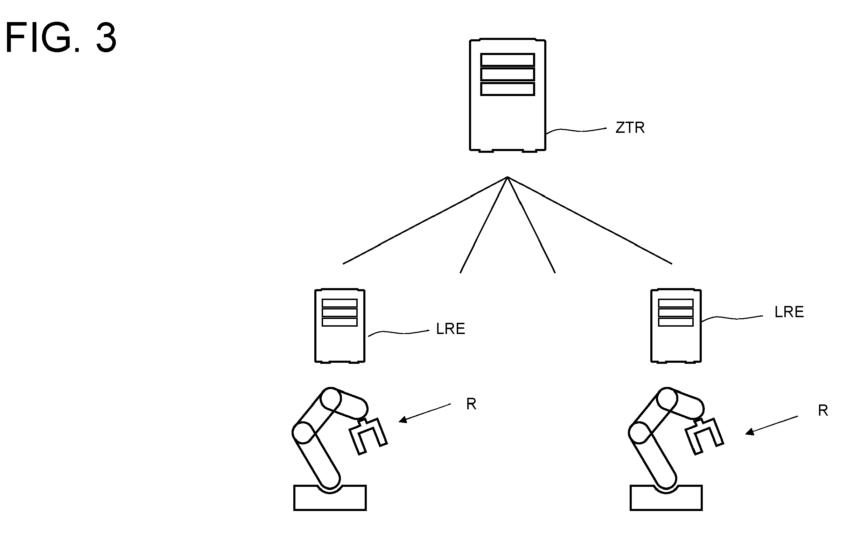

**Figur 3** zeigt schematisch den zentralen Trainingsrechner ZTR, der z.B. über ein WAN mit den lokalen, am Roboter R angeordneten Ressourcen interagiert.

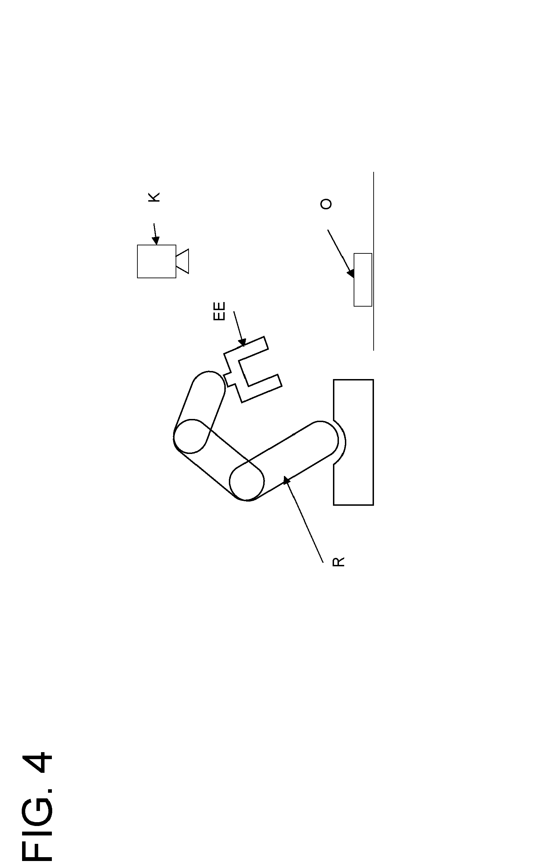

**Figur 4** zeigt den Roboter R in einer schematischen Darstellung mit einer ebenfalls nur schematisch angedeuteten Endeffektoreinheit EE und der Kamera K, die so ausgerichtet ist, dass sie das zu greifende Objekt O im Arbeitsbereich des Roboters sehen kann (FoV, field of view).

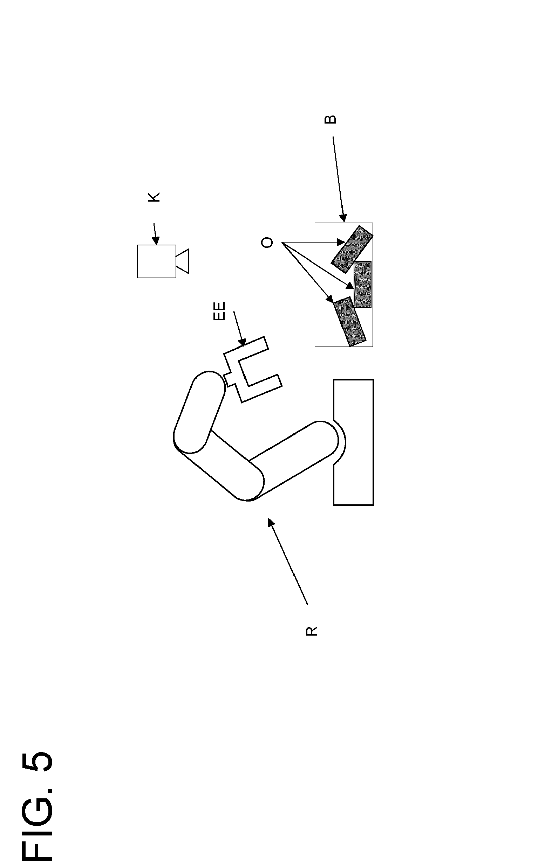

**Figur 5** zeigt das ähnliche Szenario wie in Figur 4, nur dass die Objekte O im Arbeitsbereich des Roboters R ohne Restriktionsbedingungen angeordnet sind, also zum Beispiel in einer Kiste in sich teilweise überlappender Form. Diese Anordnung der Objekte O ohne Restriktionen macht zum einen die Objektidentifikation und die Erfassung von Lage und/oder Orientierung des Objektes O und damit auch das Berechnen der Greifinstruktionen komplexer.

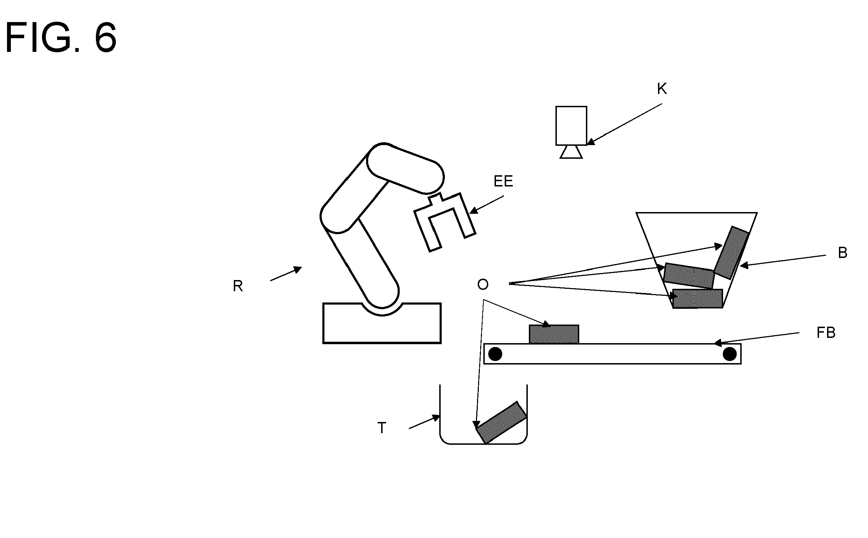

**Figur 6** zeigt wiederum ein ähnliches Szenario wie in Figur und vier und fünf abgebildet, mit dem Unterschied, dass die Objekte O hier auf einem schematisch dargestellten Förderband FB, in einem Behältnis B angeordnet sein können und wobei der Roboter R beauftragt ist, die Objekte O in ein Transportbehältnis T abzulegen.

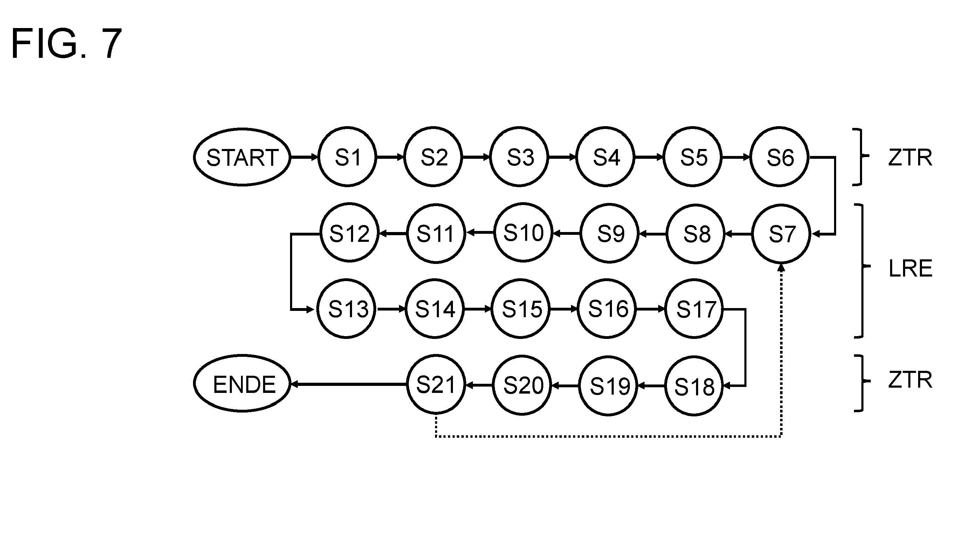

**Figur 7** ist ein Ablaufdiagramm eines zentralen Betriebsverfahren zum Betreiben eines Systems, wie vorstehend beschrieben. Das Verfahren verteilt ausgeführt und umfasst Verfahrensschritte, die auf dem zentralen Trainingsrechner ZTR und auf der lokalen Recheneinheit LRE ausgeführt werden.

Nach dem Start des Verfahrens wird in Schritt S1 eine Objektart eingelesen. Dies erfolgt auf dem zentralen Trainingsrechner ZTR. In Schritt S2 wird auf einen Modellspeicher MEM-M zugegriffen, um das 3D-Modell zu laden. In Schritt S3 werden mittels einer Render Engine (Renderer) synthetische Objektdaten erzeugt bzw. Bilddaten auf Basis des 3D-Modells synthetisiert. Vorzugsweise wird dazu der Synthesealgorithmus A1 angewendet. Das Tiefenbild wird zusammen mit den Labels (also insbesondere Lage und Orientierung und optional Klasse) als Ergebnis abgespeichert. In Schritt S4 wird das Vortraining des neuronalen Netzwerks ANN auf Basis der zuvor erzeugten synthetischen Objektdaten ausgeführt, um in Schritt S5 Vortrainingsparameter bereitzustellen. In Schritt S6 werden die bereitgestellten Vortrainingsparameter, in Form von Gewichten, an die zumindest eine lokale Recheneinheit LRE übermittelt.

Folgende Schritte werden anschließend auf der zumindest einen lokalen Recheneinheit LRE ausgeführt:
In Schritt S7 werden die Vor- oder Nachtrainingsparameter auf der lokalen Recheneinheit LRE eingelesen. In Schritt S8 wird daraufhin mit den eingelesenen Gewichten (Parametern) das neuronale Netzwerk ANN implementiert bzw. instanziiert. In Schritt S9 werden Bilddaten bd mit der Kamera K erfasst, die in Schritt S10 der aktuell implementierten Instanz des neuronalen Netzwerks ANN als Input zugeführt werden. Das neuronale Netzwerk ANN stellt in Schritt S11 einen Ergebnisdatensatz 100 bereit, der als Zwischenergebnis fungieren kann. In Schritt S12 kann nämlich ein modifizierter ICP Algorithmus A2 auf den Ergebnisdatensatz 100 angewendet werden, um in Schritt S13 einen verfeinerten Ergebnisdatensatz 200 zu berechnen bzw. zu erzeugen. In Schritt S14 werden aus dem erzeugten verfeinerten Ergebnisdatensatz 200 Greifinstruktionen berechnet, die in Schritt S15 mit der Robotersteuerung RS ausgetauscht werden bzw. an selbige übermittelt werden. In Schritt S16 werden Nachtrainingsdaten mit einem Annotationsalgorithmus A3 erzeugt. In Schritt S17 werden die lokal auf der lokalen Recheneinheit LRE erzeugten Nachtrainingsdaten an die zentrale Recheneinheit ZRE übermittelt.

Die folgenden Schritte werden wieder auf der zentralen Recheneinheit ZRE ausgeführt:
In Schritt S18 werden die übermittelten Nachtrainingsdaten erfasst, um in Schritt S19 ein Nachtraining auf Basis von auf den lokalen Ressourcen real erfassten Bilddaten bd auszuführen, so dass in Schritt S20 Nachtrainingsparameter auf dem zentralen Trainingsrechner ZTR bereitgestellt werden können. Diese können dann in Schritt S21 an die zumindest eine lokale Recheneinheit LRE übermittelt werden.

Daraufhin können auf der lokalen Recheneinheit LRE diese Nachtrainingsdaten empfangen und prozessiert werden, indem ein nachtrainiertes neuronales Netz implementiert wird, dass dann mit neuen Bilddaten zur Anwendung kommen kann.

Danach kann das Verfahren iterativ die Schritte ausführen, die auf das Nachtraining bezogen sind, bis das Verfahren konvergiert (in Fig. 7 als gestrichelter Pfeil gekennzeichnet, der von S21 zu S7 zurückverweist) oder es kann andernfalls beendet werden.

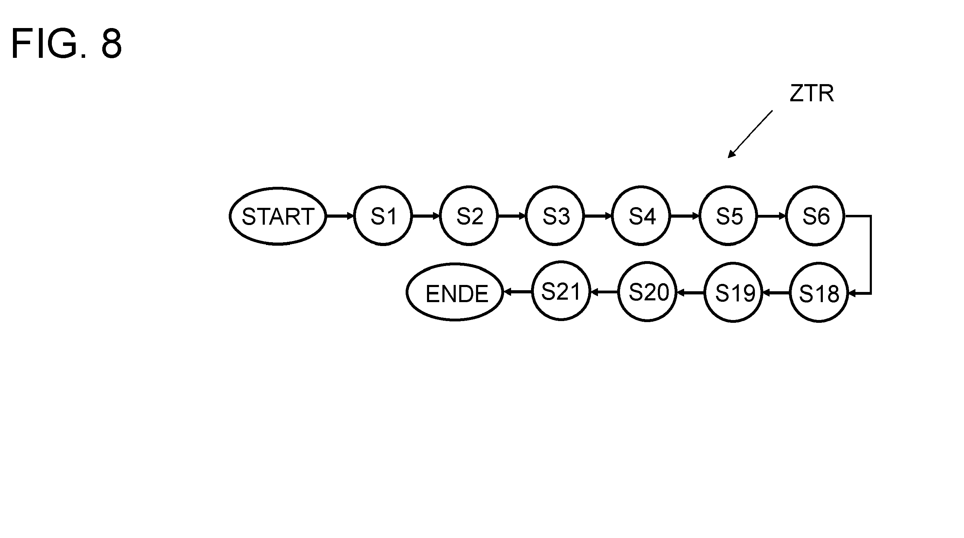

**Figur 8** zeigt ein Ablaufdiagramm für ein Verfahren, das auf dem zentralen Trainingsrechner ZRE ausgeführt wird. Es betrifft die Schritte S1 bis S6 und S18 bis S21 aus den in Zusammenhang mit Figur 7 beschriebenen Schritten.

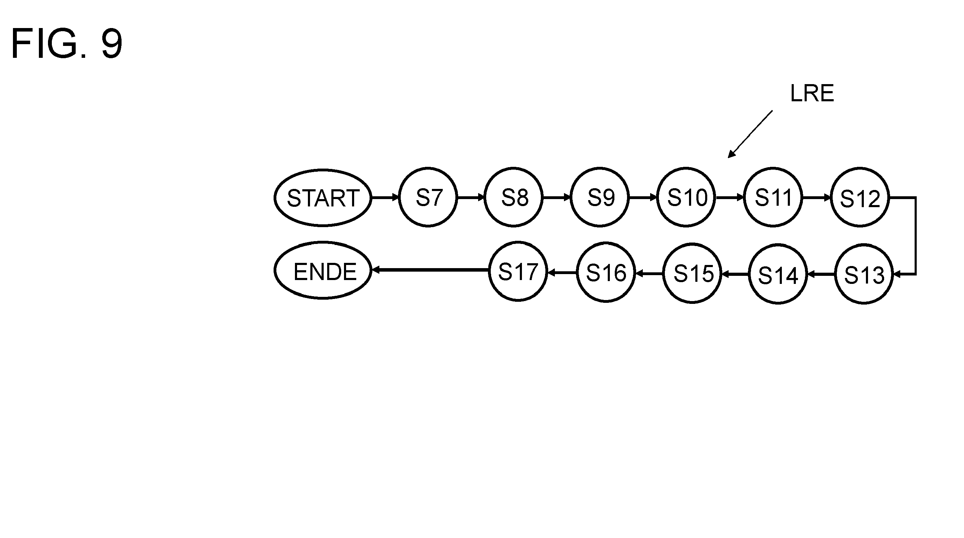

**Figur 9** zeigt ein Ablaufdiagramm für ein Verfahren, das auf der lokalen Recheneinheit LRE ausgeführt wird. Es betrifft die Schritte S7 bis S17 aus den in Zusammenhang mit Figur 7 beschriebenen Schritten.

Das System bzw. Verfahren kann eine Reihe von Algorithmen durchführen. Erstens wird ein Synthesealgorithmus A1 angewendet, der dazu dient, Objektdaten in Form von Bilddaten zu synthetisieren. Die synthetisierten Objektdaten werden aus dem jeweiligen objektart-spezifischen 3D-Modell erzeugt. Zweitens kann ein modifizierter ICP-Algorithmus A2 angewendet werden, der dazu dient, Referenz(bild)daten zu erzeugen, um die Ergebnisdaten, die durch Anwendung des neuronalen Netzwerkes erzeugt werden, zu "bewerten" bzw. zu annotieren. Drittens kann ein Annotationsalgorithmus A3 angewendet werden, um diese Referenzbilddaten zu erzeugen. Der Annotationsalgorithmus A3 dient zum Erzeugen von annotierten Nachtrainingsdaten. Dazu wird auf die Ergebnisdaten zugegriffen, die bei Anwendung des neuronalen Netzwerkes berechnet werden, nämlich die Labels, insbesondere mit Lagedaten, Orientierungsdaten und ggf. Klassenidentifikationsdaten. Zu diesen Daten wird auf das 3D-Modell zugegriffen, um die zu diesen Daten "passenden" bzw. zugeordneten Bilddaten zu bestimmen. Diese Bilddaten werden dann als Referenzbilddaten verwendet.

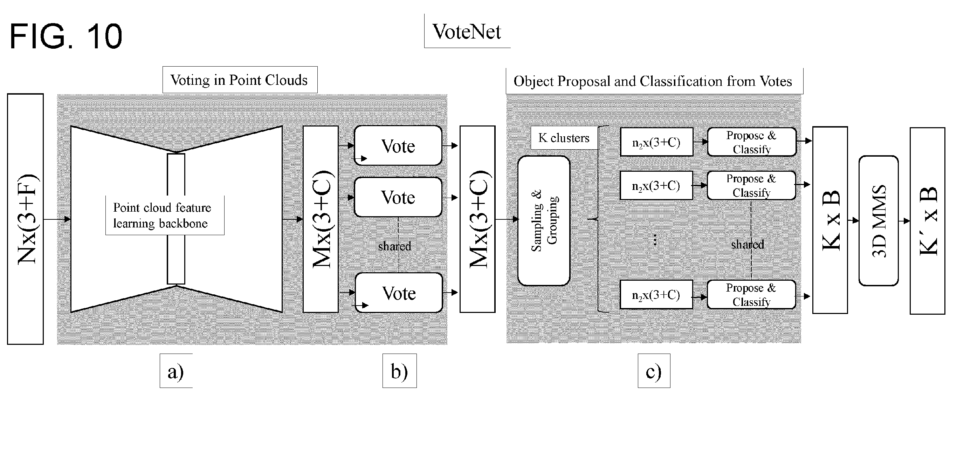

**Figur 10** zeigt eine favorisierte Architektur des neuronalen Netzwerkes ANN. Die Architektur des verwendeten neuronalen Netzes folgt im Wesentlichen der von Votenet, bestehend im Wesentlichen aus drei Modulen:

1. einem Backbone zum Erlernen von Merkmalen, insbesondere lokalen Merkmalen gekoppelt mit
2. einem Auswertemodul zur Auswertung und/oder Akkumulation von einzelnen Merkmalsvektoren mit Schichten für die Interpolation von 3D-Punkten,
3. einem Umwandlungsmodul, das einen Abstimmungsmechanismus implementiert oder auch als Votingmodul bezeichnet werden kann.

Bei der Votenet-Architektur dient das Backbone dazu, (optimale) lokale Merkmale zu lernen. Bei dem Voting-Modul gibt jeder Merkmalsvektor eine Stimme für das Vorhandensein eines Objekts ab. Das Votingmodul wandelt die Stimmen aus dem Voting-Modul in Objektdetektionen um. Für weitere Details sei in Bezug auf das Votenet sei auf die folgende Publikation verwiesen: C. R. Qi, O. Litany, K. He and L. Guibas, "Deep Hough Voting for 3D Object Detection in Point Clouds," 2019 IEEE/CVF International Conference on Computer Vision (ICCV), 2019, pp. 9276-9285.

Das neuronale Netzwerk ist vorzugsweise ein tiefes Netzwerk, DNN. Der Erfolg tiefer neuronaler Netze ("deep neural networks", DNN) für die Klassifikation/Regression beruht im Wesentlichen auf der Tatsache, dass nicht nur der Klassifikator/Regressor selbst sondern auch die für die Klassifikation/Regression herangezogenen Merkmale selbst gelernt werden. Ein Merkmal ist zu verstehen als eine auf die Rohdaten angewandte Transformation mit dem Ziel, die Störungen aus den Rohdaten zu filtern (z.B. Einflüsse von Beleuchtung und Blickwinkel) gleichzeitig aber alle für die zu lösende Aufgabe relevanten Informationen (z.B. die Objektlage) zu bewahren. Die Merkmalsextraktion findet im Eingangsmodul von Votenet statt (Figur 10 a).

Eingabe in die erste Schicht des Netzwerks ist eine Punktewolke, also eine Menge von Punkten im dreidimensionalen Raum. Im Gegensatz zu einem regulären Gitter, über dem typischerweise 2D-Bilder definiert sind, besitzt diese kaum topologische Informationen: Die Nachbarschaft zweier Punkte ist nicht unmittelbar klar. Die Berechnung eines Merkmals ist aber auf topologische Informationen angewiesen. Denn: Der Grauwert eines einzelnen Pixels findet sich möglicherweise hundertfach in ein und demselben Bild wieder und ist somit wenig aussagekräftig. Erst zusammen mit den Grauwerten in seiner Nachbarschaft lässt sich ein Pixel deutlich von Pixeln aus anderen Bildregionen unterscheiden und entsprechend - auf einem höheren Abstraktionsniveau - Objekte vom Hintergrund oder anderen Objekten differenzieren. Der Mangel an topologischen Informationen wird im Backbone durch die Auswahl von M Saatpunkten ("seed points") ausgeglichen, welche so gewählt werden, dass sie die Punktewolke gleichmäßig abtasten. Eine fixe Anzahl von Punkten in der Nachbarschaft eines jeden Saatpunkts werden aggregiert und mittels mehrlagiger Perzeptronen (bestehend aus Faltungsoperatoren gekoppelt mit einer Nichtlinearität) in einen $C$-dimensionalen Merkmalsvektor umgerechnet.

Der Eingang in das Voting-Modul (Figur 10b) besteht also aus der 3D-Position der M Saatpunkte und jeweils einem Merkmalsvektor. Diese votieren für das Vorhandensein eines Objekts, indem sie in Richtung des Schwerpunkts einer möglichen Detektion wandern. Eine Akkumulation von Saatpunkten deutet auf das tatsächliche Vorhandensein eines Objekts an dieser Position hin. Die Menge der Verschiebungen wird durch eine Verkettung mehrerer Perzeptronen modelliert. Am Ausgang des Voting-Moduls liegen nun verschobene M Saatpunkte in Kombination mit ihren Merkmalsvektoren an.

Das Ergebnis des Votings muss im Folgenden Auswertungsmodul (Figur 10 c) in die B gewünschten Ausgänge des gesamten Netzwerks überführt werden, u.a. die Objektklasse, Lage- und Orientierung eines quaderförmigen Hüllkörpers um das Objekt ("Bounding Box") und einer Unsicherheit der jeweiligen Schätzung. Hier kommen ähnliche Abtast- und Gruppierungsmechanismen zum Tragen wie im Backbone diesmal angewandt auf die Menge der Saatpunkte und ihren Merkmalen: Insgesamt kann das Netz maximal K verschiedene Objekte innerhalb der eingespeisten Punktwolke erkennen, d.h. jeder Saatpunkt wird einem von $K < M$ Clusterzentren zugeordnet. Aus den Elementen eines Clusters wird wieder mit Hilfe von Perzeptronen jeweils ein $B$-dimensionaler Ausgangsvektor berechnet.

Die Werte $M, N,$ C, K sind so genannte Hyperparameter und werden im Vorfeld des Trainings fest gewählt.

Anzahl und Kombination einzelner Schichten innerhalb der einzelnen Module werden auf den vorliegenden Anwendungsfall hin optimiert. Die eigentliche Optimierung erfolgt mittels stochastischem Gradientenabstieg. Für weitere Details wird auf Kingma, Diederik P., and Jimmy Ba. "Adam: A method for stochastic optimization." arXiv preprint arXiv:1412.6980 (2014) verwiesen.

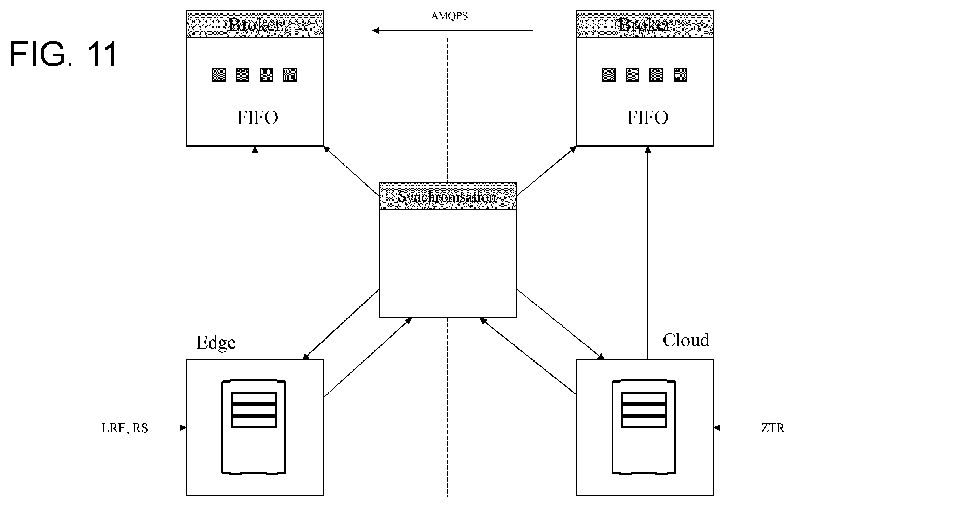

Die Synchronisation bzw. der Datenaustausch zwischen dem zentralen Trainingsrechner ZTR und den lokalen Recheneinheit LRE wird im Folgenden unter Bezugnahme auf **Figur 11** beschrieben.

Das Resultat des Trainings, Vor- und Nachtrainings, das ausschließlich auf dem zentralen Trainingsrechner ZTR ausgeführt wird, ist ein Satz von Werten oder Gewichten für die Parameter des neuronalen Netzes ANN, die in einer Datei auf komprimierte Form zusammengefasst und einer oder mehrerer lokalen Recheneinheiten LRE über folgenden allgemeinen Synchronisationsmechanismus zur Verfügung gestellt werden: Auf dem zentralen Trainingsrechner ZTR und lokaler Recheneinheit LRE wird, ebenfalls als Microservice, ein so genannte Message Broker (z.B. RabbitMQ) ausgeführt. Er stellt auf beiden Seiten jeweils eine FIFO-Warteschlange (First in First Out) zur Verfügung. Dies ist schematisch in Fig, 11 dargestellt. In der Warteschlage können Aufträge zum Up- bzw. Download gespeichert werden. Ein Service auf der lokalen Recheneinheit LRE verarbeitet jeweils die erste Nachricht aus beiden Warteschlangen, sobald dort Nachrichten vorliegen und eine Netzwerkverbindung zum jeweiligen Broker besteht. Nachrichten aus der Warteschlange des lokalen Brokers initiieren einen Transfer von der lokalen in die zentrale Recheneinheit (gleichbedeutend mit zentralem Trainingsrechner ZTR) und umgekehrt. Nach dem Transfer werden Original und Kopie der Datei auf Integrität und Gleichheit überprüft. Erst nach erfolgreichem Abschluss des Transfers wird die Nachricht aus der jeweiligen Warteschlange gelöscht. Der Datenaustausch basiert auf einem asynchronen Kommunikationsprotokoll. Dies hat den Vorteil, dass das Verfahren auch dann auf der lokalen Recheneinheit betrieben werden kann, wenn keine Internetverbindung zu dem zentralen Trainingsrechner besteht.

Im Folgenden soll der grundsätzliche Ablauf nochmals zusammengefasst werden.

Das Bild der Kamera K wird zunächst in das neuronale Netz eingespeist, welches optional die Klasse, aber zumindest die Lage und Orientierung eines oder mehrerer erkannter Bauteile ausgibt. Das Ergebnis ist meist zu ungenau für einen prozesssicheren Griff. Deswegen wird es mit Hilfe eines modifizierten ICP-Algorithmus oder einem Registrierungsverfahren weiter verfeinert, indem erwartetes und gemessenes (sprich sensorisch mit der Kamera K erfasstes) Tiefenbild miteinander verglichen werden. Für weitere technische Details zum klassischen ICP-Algorithmus sein auf die Publikation Besl, Paul J., and Neil D. McKay. "Method for registration of 3-D shapes." In Sensor fusion IV: control paradigms and data structures, vol. 1611, pp., 586-606. International Society for Optics and Photonics, 1992 verwiesen. Roboter und Kamera besitzen infolge eines initialen Kalibriervorgangs ("Hand-Auge-Kalibrierung") ein gemeinsames Koordinatensystem. Dadurch können erkannte Lage und Orientierung eines Objekts zusammen mit der gewünschten Lage und Orientierung des Greifers relativ zum Objekt in eine Greifposition umgewandelt und dann dem Roboter übergeben werden. Dieser übernimmt nun die Planung und Ausführung des tatsächlichen Griffs.

Vor dem Betrieb muss das neuronale Netz trainiert werden, und zwar auf der Basis eines Datensatzes von Tupeln aus jeweils einem Bild und der darin enthaltene Bauteil bzw. Objekt. Hierbei werden die Parameter des neuronalen Netzes durch ein stochastisches Gradientenabstiegsverfahren dahingehend optimiert, dass die Abweichung zwischen der laut Trainingsdatensatz erwarteten Ausgabe mit der durch das Netz berechneten minimiert wird. Das trainierte Netz ist ein generisches Modell für die Objekterkennung, welches im Sinne einer Blackbox einem Eingangsbild die Lage, Orientierung und Klasse aller der darin enthaltenen Bauteile (Objekte) zuordnet.

Schon bei geringfügig komplexen Bauteilen ist die Aufnahme von Trainingsdaten zeitaufwändig und teuer. Im Rahmen des hier beschriebenen Verfahrens werden die Trainingsdaten ausschließlich synthetisch, also per Simulation in einem Computergraphiksystem, erzeugt. Um die Zahl der benötigten Bilder so gering wie möglich zu halten, greift die Synthese auf physikalisches a-priori-Wissen zurück wie zum Beispiel über die stabilen Lagen, unter denen ein Objekt überhaupt auftreten kann, oder seine Symmetrieeigenschaften.

Physikalische Analyse, Trainingsdatensynthese und das Training sind von hoher Speicher- und Laufzeitkomplexität und werden auf dem zentralen Trainingsrechner mit entsprechender Leistungsfähigkeit ausgeführt. Das Ergebnis des Trainings (Gewichte/Parameter des neuronalen Netzes) wird dann auf ein oder mehrere lokale Recheneinheiten verteilt, die sich im lokalen Netzwerk eines oder mehrerer Roboter befinden. Mit den lokalen Recheneinheiten ist im Betrieb auch die Kamera verbunden. Der Roboter übermittelt nun eine Nachricht über das lokale Netzwerk, um die Bildaufnahme und -auswertung auszulösen. Die lokale Recheneinheit antwortet mit einer Greifposition. Wird mehr als ein Objekt lokalisiert, priorisiert das System die Greifpositionen nach gewissen Kriterien wie Erreichbarkeit, Effizienz, usw.

Wie bereits angedeutet, besteht die Bildanalyse im Wesentlichen aus zwei Schritten:

1. Auswertung eines neuronalen Netzes,
2. Feinpositionierung mittels eines modifizierten Registrierungsalgorithmus.

Schritt 1. ist mangels realer Trainingsdaten oft nicht genau genug für die Durchführung des Griffs. Schritt 2 dagegen liefert sehr genau Ergebnisse, bedarf aber einer hinreichenden Initialisierung durch Schritt 1. Die Nachteile beider Schritte lassen sich durch folgende Vorgehensweise wechselseitig kompensieren: In einer Bootstrapping-Phase lokalisiert (und greift) der Roboter zunächst Teile unter einfacheren Umgebungsbedingungen, also ohne Restriktionsbedingungen, z.B. sind die Teile disjunkt auf einer Ebene angeordnet anstatt einander überlagernd in einer Kiste. Unter diesen Umständen ist das rein synthetisch trainierte Netz ausreichend für eine Initialisierung des Registrierungsalgorithmus. Die Bilder der Bootstrapping-Phase können mit dem genauen Ergebnis aus Schritt 2 annotiert und als realer Trainingsdatensatz an den zentralen Trainingsrechner übergeben werden, wo eine Optimierung des neuronalen Netzes durchgeführt und zurück an die lokale Recheneinheit übergeben wird. Dieser Vorgang kann iterativ fortgesetzt werden, auch wenn das System bereits in seiner Zielumgebung (z.B. der Kiste) operiert, um die Genauigkeit/Zuverlässigkeit weiter zu steigern.

Bei dem zentralen Trainingsrechner kann es sich um einer oder mehreren virtuelle Maschinen in einer Public oder Private Cloud handeln, oder aber auch nur einen einzelnen leistungsstarken PC im Netzwerk des Anwenders. Sie bildet einen Cluster (auch im Grenzfall einer einzigen Instanz), deren Elemente miteinander über ein Netzwerk kommunizieren. Auf dem zentralen Trainingsrechner werden mittels einer Orchestrierungssoftware (z.B. Kubernetes) eine Reihe von Microservices ausgeführt, u. a. für die Datenspeicherung, geometrische Analyse von CAD-Modellen, Datensynthese und das Training neuronaler Netze (s. u.). Der zentrale Trainingsrechner kommuniziert mit einer oder mehrerer lokalen Recheneinheiten über ein WAN (z. B. das Internet).

Kennzeichnend für die lokale Recheneinheit ist, dass sie über ein lokales Netzwerk stets mit einer oder mehrerer Robotersteuerungen RS verbunden ist. Die Verbindung mit dem zentralen Trainingsrechner über das WAN hingegen darf zeitweilig unterbrochen werden, ohne dabei den Betrieb des Gesamtsystems zu stören. Die lokale Recheneinheit wiederum kann ähnlich wie die zentrale aus einer oder mehreren Instanzen (VMs, PCs, Industrie-PCs, Embedded Systems) bestehen, die einen (Kubernetes-)Cluster bilden. Auch hier wird die gesamte Software als Microservices in Form von Containern ausgeführt.

Die Kamera ist mindestens in der Lage dreidimensional Bilder der Szene aufzunehmen, zusätzlich aber auch Intensitätsbilder im sichtbaren oder infraroten Spektrum. Ein dreidimensionales Bild besteht aus Elementen (Pixeln), dessen Wert der Abstand bzw. Tiefe des jeweils abgebildeten Szenenpunkts zugeordnet ist. Die Vorgehensweise bei der Bestimmung der Tiefeninformation (Laufzeitmessung, Streifenprojektion) ist für das hier beschriebene Verfahren unerheblich. Auch von der Wahl des Herstellers ist es unabhängig.

Ganz im Sinne aus dem Consumer-Bereich bekannten Konzept Plug & Play lädt sich die lokale Recheneinheit einen passenden Treiber von dem zentralen Trainingsrechner herunter und führt ihn automatisch aus, sobald eine bekannte Kamera angeschlossen wird.

Bei dem Roboter handelt es sich vorzugsweise um einen üblichen sechsachsigen Industrieroboter, aber es können auch einfachere programmierbare Manipulatoren, wie eine oder mehrere miteinander kombinierte Lineareinheiten, zum Einsatz kommen. Die Wahl des Herstellers ist nicht relevant, solange die Robotersteuerung über das Netzwerk auf dem Transportlayer (OSI-Schicht 4) mit der lokalen Recheneinheit kommunizieren kann. Unterschiede im Kommunikationsprotokoll (OSI-Schichten 5-7) unterschiedlicher Hersteller werden durch einen speziellen Übersetzungs-Microservice auf der lokalen Recheneinheit ausgeglichen. Der Roboter ist mit einem vorzugsweise generischen Greifwerkzeug wie zum Beispiel einem Vakuumsauger oder einem Backengreifer ausgestattet. Denkbar sind aber auch Spezialgreifer, die mit zusätzlichen, z.B. taktilen, Sensoren ausgestattet oder zur Herstellung eines Formschlusses beim Greifen auf die Geometrie des Objekts angepasst sind.

Als Eingabedaten für den Synthesealgorithmus stehen zur Verfügung:

-   Ein polygonales geometrisches Modell des Bauteils (z. B. ein Dreiecksnetz);
-   Maßeinheit des 3D-Modells;
-   Projektionseigenschaften der Kamera (insbesondere Brennweite, Hauptpunktverschiebung, radiale Verzerrung);
-   Relative Lage/Orientierung der Kamera zu einer Ebene, auf der die Bauteile selbst oder ein Sammelbehältnis/Kiste für die Aufnahme verteilt/abgestellt werden/wird;
-   Ein oder mehrere Griffe, d. h., mögliche Lagen/Orientierungen eines geeigneten Greifers relativ zum Koordinatensystem des 3D-Modells, und optional:
-   wahlweise ein 3D-Modell der verwendeten Kiste;
-   wahlweise die Dichte oder Dichteverteilung des Bauteils.

Diese Daten werden vom Anwender entweder über eine Webseite oder eine App zusammen mit Metadaten über das zu erkennende Produkt/Objekt (Bezeichnung, Kunde, Artikelnummer, usw.) an den zentralen Trainingsrechner übermittelt.

Dem Verfahren liegt folgendes kinematisches Modell eines Bauteils bzw. Objektes zugrunde: Wir nehmen zunächst an, dass alle Objekte auf einer Ebene P liegen. Diese einschränkende Annahme kann später für das Entnehmen aus einer Kiste abgemildert werden (s. u.). Die Lage eines Objekts relativ zum lokalen Koordinatensystem dieser Ebene wird mittels einer euklidischen Transformation *(R, t),* bestehend aus einer

Rotationsmatrix $R \in SO\,(3)$ und einem Translationsvektor $t \in R^3$

,

beschrieben. Die Lokalisierung eines Objekts ist also gleichbedeutend mit der Suche in der unendlichen Gruppe der euklidischen Transformationen. Durch die geometrische/physikalische Analyse des Bauteils kann der Suchraum jedoch stark eingeschränkt werden.

Aufgrund physikalischer Gesetzmäßigkeiten kann ein Objekt nämlich nur eine endliche diskrete Anzahl an Orientierungen einnehmen. Ein Würfel zum Beispiel kommt auf einer Ebene nur auf einer seiner sechs Seiten zu liegen. Sein Training sollte sich also auf diese sechs Zustände beschränken. In jeder der stabilen Orientierungen (Lagen) kann das Objekt zudem noch um die jeweilige Hochachse gedreht werden. Insgesamt ergibt sich die Orientierung R als Komposition eines Elements $R_i$ und einer Rotation $R\varphi$ um die Hochachse, wobei i = 1,...,n einen der stabilen Zustände bezeichnet und $\varphi \in R$ den kontinuierlichen Drehwinkel bezeichnet.

Die stabilen Zustände $R_i$ werden mit Hilfe einer Monte-Carlo-Methode ermittelt. Dies kann folgendermaßen ausgeführt werden: Das 3D-Modell wird in einer physikalischen Simulationsumgebung in einem fixen Abstand über der Ebene platziert und fallen gelassen. Wahlweise kann die Dichte im Inneren des Modells (oder Teilen davon) festgelegt werden. Das Simulationssystem löst die Bewegungsgleichungen des fallenden Objekts und seiner Kollisionen mit der Erde. Der Vorgang wird über eine große Zahl zufällig ausgewählter Startorientierungen wiederholt. Über alle finalen Orientierungen modulo der Drehung um die Hochachse wird ein Histogramm berechnet. Die Maxima dieses Histogramms entsprechenden den gesuchten stabilen Zuständen. Die Abtastung der Rotationsgruppe $SO\,(3)$ bei der Wahl der Startorientierung muss mit großer Sorgfalt geschehen, um eine Verzerrung der Schätzfunktion (Bias) zu vermeiden.

Für jede stabile Orientierung $R_i$ wird auch die Lage des Objekts relativ zum Koordinatensystem der Ebene erhalten. Unter der Annahme, dass die Z-Achse dieses Koordinatensystems orthogonal auf der Ebene steht, können die X- und Y-Komponente von $t_i$ verworfen werden. Sie genau gilt es ja bei der Objektlokalisierung zu bestimmen. In der Praxis sind ihre Werte jedoch auch beschränkt, entweder durch die endliche Ausdehnung der Ebene P oder das Blickfeld der Kamera. Die Z-Komponente von $t_i$ wird für die Weiterverarbeitung gespeichert. Sie dient dazu, das Objekt während der Synthese der Trainingsdaten (s. u.) spaltfrei auf der Ebene zu platzieren.

Der Wertebereich des Drehwinkels $\varphi$ kann auch weiter eingegrenzt werden. Aufgrund von Periodizität liegt er im Allgemeinen im Intervall $[0, 2\pi]$. Liegt eine Rotationssymmetrie um die Hochachse vor, verkleinert sich dieses Intervall weiter. Im Extremfall eines Zylinders, der auf seiner Grundfläche steht, schrumpft es auf einen einzigen Wert 0 zusammen. Das geometrische Bild des Zylinders ist unabhängig von dessen Drehung um die Hochachse. Der Wertebereich des Würfels z. B. beträgt, wie leicht einzusehen ist, $[0, 0.5\pi]$.

Im Rahmen des beschriebenen Verfahrens wird der Wertebereich von $\varphi$ wie folgt vollautomatisch bestimmt: In der bereits oben beschriebenen Simulationsumgebung wird (jeweils für jeden stabilen Zustand) unter Variation des Winkels $\varphi$ eine Serie von Draufsichten gerendert. Durch Berechnen des Abstands eines jeden Bildes vom ersten Bild der Serie im Sinne der $L_2$-Norm erhält man eine skalarwertige Funktion s über dem Drehwinkel. Diese wird zunächst um ihren Mittelwert bereinigt und mittels einer schnellen Fourier-Transformation in den Frequenzbereich transformiert. Das Maximum der

Fourier-Transformierten liefert eine notwendige Bedingung für die Periodizität des Signals s. Erst das Vorliegen von Nullstellen von s an diesen Frequenzmaxima ist hinreichend. Um die maximale Periodizität zu ermitteln, werden die Frequenzmaxima in absteigender Reihenfolge behandelt.

Zur Bildsynthese (Synthesealgorithmus):

Um die Verallgemeinerungsfähigkeit des neuronalen Netzes zu gewährleisten, ist der infolge der geometrischen Analyse reduzierten Suchraum gleichmäßig abzutasten. Nur während des Trainings gezeigte Lagen/Orientierungen, können im Betrieb auch zuverlässig erkannt werden.

In einer Computergraphikumgebung wird mit Hilfe des Synthesealgorithmus für jeden stabilen Zustand i das lokale Koordinatensystem des 3D-Modells im Abstand $t_{i,z}$ zur Ebene platziert, auf einem kartesischen Raster mit Werten zwischen $min\ t_x$ und $max\ t_x$ bzw. $min\ t_y$ und $max\ t_y$. Für jede Position auf der Ebene wird zusätzlich der Drehwinkel $\varphi$ im während der Analysephase bestimmten Bereich $[min\ \varphi, max\ \varphi]$ variiert. Mit einer virtuellen Kamera, deren Projektionseigenschaften mit denen der im Betrieb verwendeten realen Kamera übereinstimmen, wird für jede Objektlage und -orientierung aus dem diskretisierten Suchraum ein Tiefenbild gerendert. Jedes Bild wird mit den Informationen über Lage und Orientierung (Zustand i, Rotationsmatrix $R_\varphi R_i$, und laterale Position $(t_x, t_y)$ auf der Ebene) der darin enthaltenen Bauteile versehen.

Neben der für die Lösung der Erkennungsaufgabe relevanten Information enthalten reale, während des Betriebs aufgenommene Bilder Störungen, die die Erkennungsgenauigkeit signifikant verschlechtern können. Diese unterteilen sich in zwei Kategorien:

1. Systematische Störungen, wie eine unzureichende Kalibrierung der relativen Lage zwischen Kamera und Ebene oder die Verletzung von Modellannahmen (z. B. unbekannte Objekte in der Szene, Teile in einer Kiste anstatt disjunkt auf einer Ebene).
2. Stochastische Störungen wie dem Bildsignal überlagertes Rauschen.

Ebenso wie für das Nutzsignal gilt: Das Netzwerk kann nur Invarianz gegenüber Störungen lernen, wenn im Trainingsdatensatz dafür jeweils repräsentative Bilder vorhanden sind. Zu jeder der oben beschrieben Konstellationen, werden zusätzliche Bilder unter Simulation verschiedener Störeinflüsse erzeugt. Insbesondere wird

1. Gaußsches Rauschen verschiedener Varianzen überlagert,
2. dem Bild eines Zielobjekts ein oder mehrere Täuschobjekte in Form eines einhüllenden Quaders hinzugefügt, um die Diskriminanz gegenüber unbekannten Objektklassen zu erhöhen,
3. die Zielobjekte um unterschiedliche Winkel aus der Ebene herausgedreht, und
4. die Ebene um mehrere Stufen in Normalenrichtung nach oben und unten bewegt.

Es sei aber angemerkt, dass dieser so genannte Ansatz der Domänenrandomisierung (vgl. hierzu: Kleeberger, K., Bormann, R., Kraus, W. et al. A Survey on Learning-Based Robotic Grasping. Curr Robot Rep 1, 239-249, 2020) nicht alle in der realen Welt auftretenden Störungen vollumfänglich erfassen kann. Deshalb besteht die grundlegende Idee der hier beschriebenen Lösung darin, dem Training mit möglichst geringem Aufwand Daten aus einer realen Umgebung zuzuführen.

Der Betrieb des Systems und die Aufnahme von realer Bilddaten als Nachtrainingsdaten wird im Folgenden beschrieben.

Zum bzw. vor dem Betrieb des Systems werden folgende Daten an die lokale Recheneinheit LRE geladen:

1. Produktmetadaten,
2. die (vor)trainierten Parameter des neuronalen Netzes,
3. das 3D-Modell sowie
4. Greifdaten.

Diese Daten sind infolge einer Synchronisierung (s. o.) vor dem Betrieb auf der lokalen Recheneinheit LRE in einer (lokalen) Datenbank abgelegt worden. Unter allen bereits trainierten Produkten wird eins (oder für den Anwendungsfall einer Sortierung mehrere) über eine HTTP-Anfrage für den Betrieb aktiviert. Diese Anfrage kann von einer App/Webseite, der Robotersteuerung RS oder einer anderen übergreifenden Instanz (z. B. SPS) stammen, ggf. unter Zuhilfenahme eines Übersetzungs-Microservices (s.o.). Alle dem Produkt zugeordneten und für die Objekterkennung relevanten Daten werden aus der Datenbank in den Hauptspeicher geladen, u.a.:

- die Parameter des neuronalen Netzes für die Groblokalisierung
- das 3D-Modell für die Feinlokalisierung mittels ICP-Algorithmus A2
- eine Menge von Griffen, also physikalisch möglichen Lagen/Orientierung des Greifers relativ zum Objekt, die vom Benutzer für das Produkt vor dem Betrieb z.B. über das Webinterface festgelegt wurden.

Die ersten Chargen des Produkts werden statt im Zielbehältnis auf der Ebene ausgebreitet, auf dem diese sonst stehen würde. Dabei sind die Teile im Wesentlichen disjunkt angeordnet, dürfen aber ansonsten in allen möglichen Lagen und Orientierungen auftreten. Dies entspricht einer Anwendung unter Restriktionsbedingungen.

Sofern keine erkannten Teile mehr abzuarbeiten sind, sendet die Robotersteuerung RS ein Signal an die lokale Recheneinheit LRE. Dadurch wird die Aufnahme eines Tiefenbilds ausgelöst, und falls ein entsprechender Sensor vorhanden ist, auch die Aufnahme eines zweidimensionalen Intensitätsbilds. Alle Bilder werden im Speicher der lokalen Recheneinheit abgelegt und vom Synchronisationsdienst zur zentralen Recheneinheit übertragen, sobald eine Netzwerkverbindung besteht. Jedes gespeicherte Bild wird dabei mit einer eindeutigen Identifikationsnummer versehen, um eine Zuordnung zu ermöglichen.

Dann wird zunächst nur das Tiefenbild vom aktivierten neuronalen Netz ausgewertet. Jede darin erkannte Objektposition (Lage, Orientierung und stabiler Zustand) wird in eine Warteschlange eingefügt und nach Zuverlässigkeit der Schätzung, die ebenfalls aus dem neuronalen Netz stammt, priorisiert. Ein weiterer Service, insbesondere der modifizierte ICP-Algorithmus arbeitet diese Warteschlange nach Priorität ab. Insbesondere verfeinert er die initiale Lage/Orientierungsschätzung durch Minimierung des Fehlers zwischen gemessenem und mit Hilfe des 3D-Modells gerendertem Tiefenbilds mittels einer Variante des Iterative-Closest-Point-Algorithmus (ICP). Das Ergebnis ist die Lage/Orientierung des 3D-Modells relativ zum Koordinatensystem der Kamera. Unter den geladenen Griffen, jeweils dargestellt durch eine Transformation zwischen Greifer- und Objektkoordinatensystem, wird ein kinematisch möglicher und kollisionsfreier gesucht, mit der Objekttransformation verkettet und dann in ein dem Roboter infolge Hand-Auge-Kalibrierung bekanntes Bezugssystem umgerechnet.

Nicht jede so erhaltene Transformation führt zwangsläufig zur Ausführung einer realen Greifbewegung. Aus Sicherheitsgründen müssen weitere Kriterien erfüllt sein, um unerwünschte Bewegungen oder gar Kollisionen des Roboters ausschließen zu können. Nur falls das ICP-Residuum einen gewissen kritischen Wert nicht übersteigt, wird der Griff in eine zweite, diesmal nach dem ICP-Residuum priorisierte Warteschlange eingereiht.

Die Robotersteuerung RS bezieht nun über weitere Netzwerkanfragen jeweils den nächstbesten Griff aus dieser Warteschlange. Daraus berechnet die Robotersteuerung eine lineare Änderung der Gelenkwinkel (Punkt-zu-Punkt-Bewegung) oder eine kartesische lineare Bahn, auf der der Greifer den Zielzustand hindernisfrei erreicht, und führt diese aus. An der Zielposition wird der Greifer aktiviert (z.B. durch Aufbau von Vakuum, Schließen der Greiferbacken, usw.), so dass danach der Arbeitszyklus mit der gewünschten Manipulation abgeschlossen werden kann (z.B. Einlegen in eine Maschine, Ablegen auf einer Palette, usw.).

Sobald der Roboter ein Teil erfolgreich gegriffen hat, signalisiert er dem Bildverarbeitungssystem, dass zu der Identifikationsnummer des aktuellen Bilds (der aktuellen Bilder, falls ein Intensitätsbild aufgenommen wurde) die endgültige Lage/Orientierung des Objekts relativ zur Kamera als "Label" in einer Datenbank auf der lokalen Recheneinheit LRE abgespeichert werden kann. Auch diese werden vom Synchronisationsdienst an die zentrale Recheneinheit LRE gesendet.

Über die Identifikationsnummer kann später der Zusammenhang zwischen Bilddaten und Labels hergestellt werden.

Der Prozess startet mit einer erneuten Bildaufnahme von vorn, sobald die Warteschlange leer ist und keine weiteren Griffe mehr bezogen werden können.

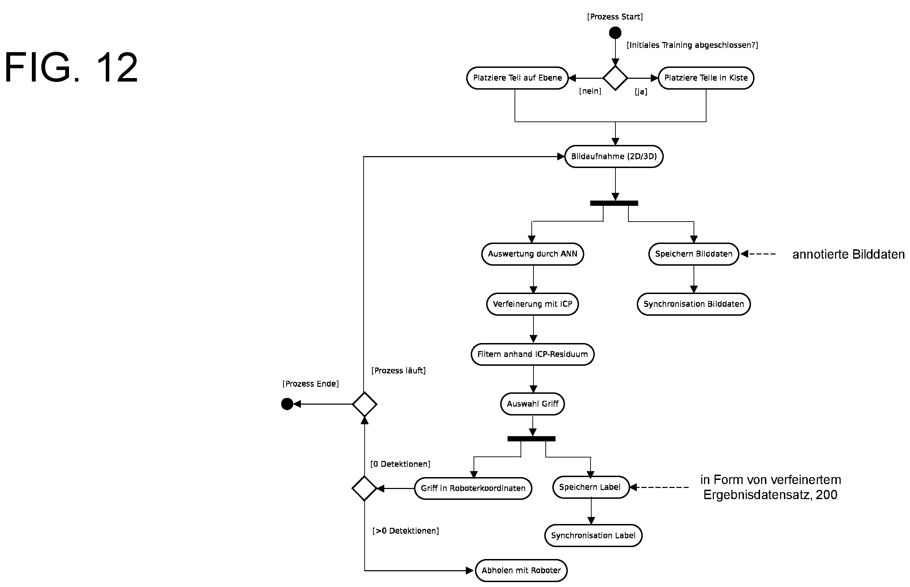

**Figur 12** zeigt ein UML Diagramm für den Betrieb/Inferenz des neuronalen Netzwerkes ANN.

Nachdem der Prozess des initialen Trainings abgeschlossen ist, wird das zu greifende Objekt entweder mit (zum Beispiel auf einer Ebene, disjunkt verteilt) oder ohne Restriktionsbedingungen (zum Beispiel in einer Kiste, beliebig übereinandergestapelt oder verschachtelt) im Sichtfeld der Kamera K angeordnet. Daraufhin wird eine Bildaufnahme durch die Kamera K ausgelöst. Nach Erfassung der Bilddaten bd der Kamera K, werden zwei Prozesse initiiert, die in Figur 12 in zwei parallelen Strängen dargestellt sind. Auf der linken Seite ist der Hauptprozess dargestellt, der dazu dient, mittels Auswertung der Bilddaten durch das Votenet die Greifinstruktionen für die Endeffektreinheit EE zu berechnen. Im rechten Strang ist das Erzeugen von Nachtrainingsdaten dargestellt. Dazu kann der Annotationsalgorithmus A3 verwendet werden. Der Annotationsalgorithmus A3 dient dazu, die mit der Kamera K erfassten Bilddaten bd zu annotieren. Die Annotation erfolgt auf Basis von synthetisierten Referenzbilddaten, die auf Basis des bestimmten Ergebnisdatensatzes (Auswertung des neuronalen Netzwerkes) aus dem 3D Modell berechnet werden. Die annotierten Bilddaten werden dann gespeichert und als Nachtrainingsdaten an den zentralen Trainingsrechner ZTR übermittelt.

Im linken Hauptstrang wird auf die original von der Kamera K erfassten Bilddaten bd das neuronale Netz ANN angewendet, um den Ergebnisdatensatz zu bestimmen. Nachfolgend kann der modifizierte ICP-Algorithmus A2 angewendet werden, um den verfeinerten Ergebnisdatensatz erzeugen. Die Greifinstruktionen werden berechnet und/oder der jeweilige Griff für das zu greifende Objekt wird ausgewählt. Der Griff in Roboterkoordinaten kann ausgegeben und insbesondere an die Robotersteuerung RS übermittelt werden. Die berechneten Labels, die in dem verfeinerten Ergebnisdatensatz repräsentiert sind, werden gespeichert und können zum Zwecke des Nachtrainings an den zentralen Trainingsrechner ZTR übermittelt werden.

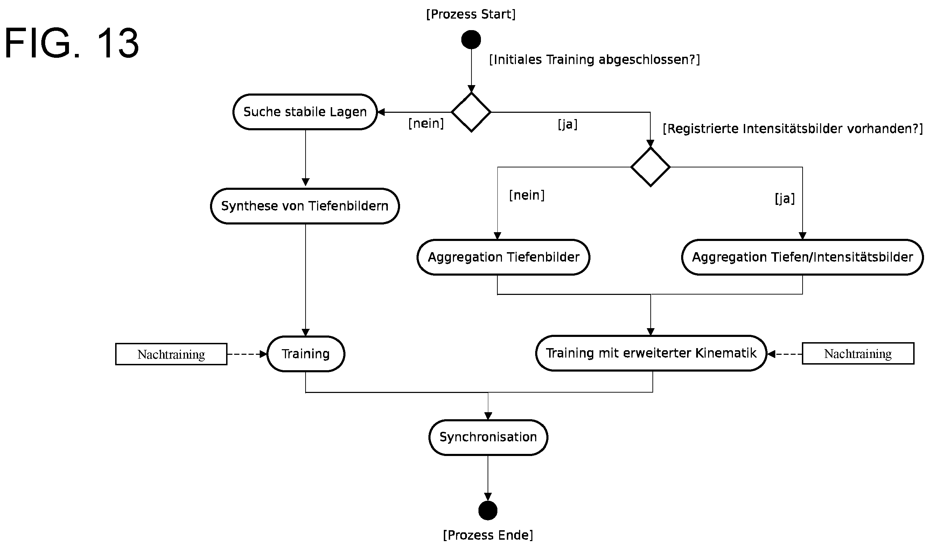

**Figur 13** zeigt ein UML Diagramm für das Training des neuronalen Netzwerkes ANN. wie in Figur 13 angedeutet, kann die optische Erfassungseinrichtung und insbesondere die Kamera K in einer bevorzugten Ausführungsform der Erfindung ausgebildet sein, sowohl Tiefenbilder als auch Intensitätsbilder von dem zu greifenden Objekt O zu erfassen. In einem Verfahrensschritt wird durch den Algorithmus geprüft, ob registrierte Intensitätsbilder vorhanden sind, um bejahendenfalls eine Aggregation der erfassten Tiefenbilder und der erfassten Intensitätsbilder auszuführen. Danach kann ein Nachtraining auf der Votenet-Architektur mit 6-dimensionalem Eingangslayer (3 Raumkoordinaten, 3 Farbkanäle) durchgeführt werden.

Falls keine registrierten Intensitätsbilder vorhanden sind, werden die Tiefenbilder aggregiert und gespeichert.

Das auf dem zentralen Trainingsrechner ZTR ausgeführte Nachtraining führt zum Erzeugen von Nachtrainingsparametern, die über den oben beschriebenen Synchronisationsmechanismus an die lokalen Recheneinheit LRE verteilt werden.

Sobald ausreichend reale Trainingsdaten gesammelt wurden, kann das neuronale Netzwerk bzw. das KI-Modell durch eine Fortsetzung des Trainings verfeinert werden. Vor dem Training werden die einzelnen Bilder in zwei separaten Dateien aggregiert, wovon die erste Datei die eigentlichen Daten für das Training enthält und die zweite Datei davon unabhängige Daten, die anhand von Metriken die Erkennungsleistung des neuronalen Netzwerkes ANN validieren (Validierungsdaten oder Referenzdaten). Im Wesentlichen handelt es sich bei den Metriken um die Erkennungsrate, die vier verschiedene Ausgänge über dem Validierungsdatensatz auf unterschiedliche Weise bewertet: 1. Ein vorhandenes Objekt wird auch erkannt ("true positives"). 2. Ein vorhandenes Objekt wird verfehlt ("false negative"). 3. Ein irrelevantes Objekt wird erkannt ("false positive"). 4. Ein irrelevantes Objekt wird ignoriert ("true negative"). Die Metriken unterscheiden sich von der Verlustfunktion, die zur Optimierung der Gewichte über dem Trainingsdatensatz herangezogen wird. Kleine Werte der Verlustfunktion implizieren im Allgemeinen nicht gute Metriken, deswegen muss der Trainingserfolg immer aufgrund beider Kriterien bewertet werden.

Die Gesamtzahl der realen Bilder sollte die Zahl der synthetisch generierten Bilder aus dem ersten Trainingsdurchgang übersteigen. Liegen nur Tiefendaten vor, bestehen die Eingangsdaten für das neuronale Netz, insbesondere das Votenet (vgl. Fig. 10), aus einer Menge von Punkten mit jeweils 3 Koordinaten. Liegen Bilder aus einer Intensitätskamera vor und ist dies relativ zur Tiefenkamera kalibriert, kann die Farbe/Intensität eines Punkts als weiteres Eingangsmerkmal herangezogen werden. Das Training wird mit den Gewichten/Parametern aus dem ersten Durchgang initialisiert. Von dieser Initialisierung wird der Gradientenabstieg fortgesetzt bis er zu einem neuen stationären Punkt konvergiert. Hierbei werden ggf. einzelne Layer vollständig oder temporär maskiert, d.h. aus der Berechnung des Gradienten ausgeschlossen.

Die Architektur des Netzes wird für das Folgetraining leicht angepasst: Rotationen, deren Drehachse tangential zur Ebene verlaufen, werden nicht als Störungen betrachtet (vgl. oben, die Berechnungen zur Erzeugung der Objektdaten auf Basis von physikalisch plausiblen Lagen und Orientierungen), sondern mitgelernt, da erstens davon auszugehen ist, dass solche Konstellationen in den realen Daten enthalten sind. Zweitens läuft der Prozess nach Synchronisation der Parameter mit der lokalen Recheneinheit LRE in der Zielumgebung ab, wo die Teile in beliebigen Orientierungen z.B. in einer Kiste zu liegen kommen.

Während der Prozess in der Zielumgebung läuft, können weitere Nachtrainingsdaten als Bild aufgenommen werden. Damit kann das in Nachtraining iterativ fortgesetzt werden, bis sich die Erkennungsmetrik (relativ zu einem hinreichend großen realen Datensatz) nicht weiter verbessert.

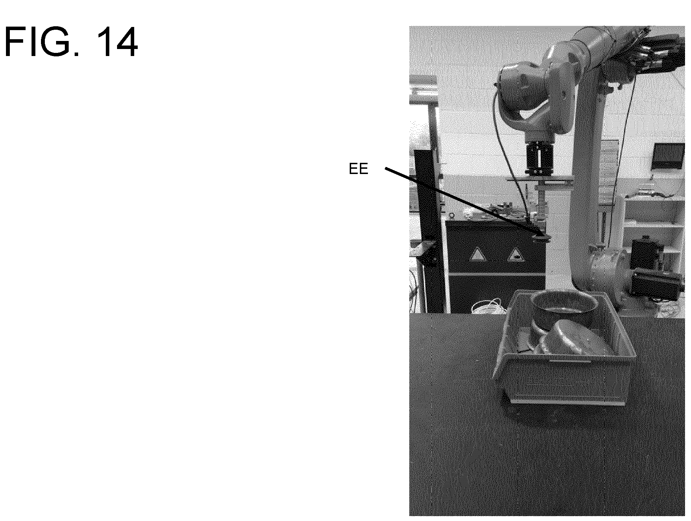

Fig. 14 zeigt ein Beispiel einer Endeffektoreinheit EE mit 4 Vakuumgreifern, die an einem Roboterarm montiert sind und in diesem Anwendungsfall eingerichtet sind, eine Verpackung (Kiste) von einem Förderband zu entnehmen.

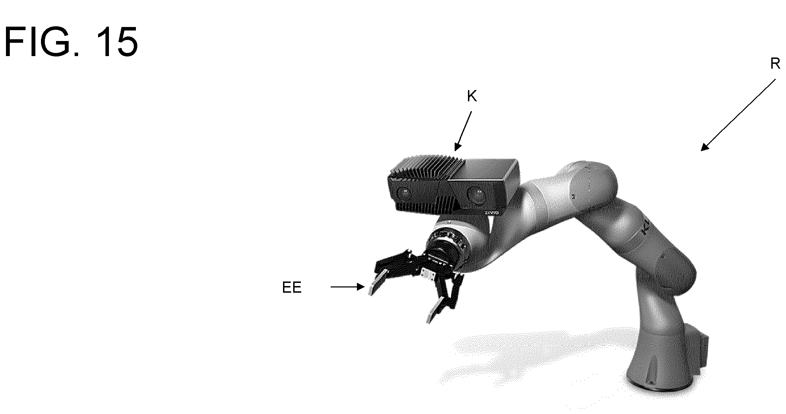

Fig. 15 zeigt ein weiteres Beispiel einer Endeffektoreinheit EE mit einem 2-Finger Greifer. Es liegt auf der Hand, dass die unterschiedlichen Typen von Greifwerkzeugen für unterschiedliche Greifaufgaben geeignet sind. Deshalb ist es in einer bevorzugten Ausführungsform der Erfindung vorgesehen, dass in Antwort auf die auf der lokalen Recheneinheit LRE erfasste bestimmte Objektart (hier also z.B. einzelne Schrauben oder Nägel) ein Identifikationsdatensatz erzeugt wird, um den Typ des Greifers zum Ausführen der jeweiligen Greifaufgabe aus einer Menge von Greifern auszuwählen. Erst daraufhin können die Greifertyp-spezifischen Greifinstruktionen mit den Positionsangaben berechnet werden. Dies erfolgt üblicherweise auf der Robotersteuerung RS in Antwort auf die bestimmte Objektart.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Die Abfolge der Verfahrensschritte kann, soweit technisch möglich, variiert werden.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für die erwähnten Beispiele von Endeffektoren angewendet werden kann, sondern auch für andere Handhabungswerkzeuge des Roboters, die mittels der Greifinstruktionen instruiert werden müssen. Des Weiteren können die Bauteile der lokalen Recheneinheit LRE und/oder des zentralen Trainingsrechners auf mehreren physikalisch-technischen Produkten verteilt realisiert sein.

**Patentansprüche**

1. Verteiltes System zum Ansteuern zumindest eines Roboters (R) bei einer Greifaufgabe zum Greifen von Objekten (O) unterschiedlicher Objektart, die in einem Arbeitsbereich (FB, B, T) des Roboters (R) angeordnet sind, umfassend:

   - Einen zentralen Trainingsrechner (ZTR), mit einem Speicher, auf dem eine Instanz eines neuronalen Netzwerkes (ANN) gespeichert ist, wobei der zentrale Trainingsrechner (ZTR) zum Vortraining und zum Nachtraining des neuronalen Netzwerks (ANN) bestimmt ist; wobei das neuronale Netzwerk (ANN) zur Objekterkennung und zur Lageerfassung, einschließlich einer Erfassung einer Orientierung des Objektes (O) trainiert wird, um Greifinstruktionen für eine Endeffektoreinheit (EE) des Roboters (R) zum Greifen des Objektes (O) zu berechnen; wobei der zentrale Trainingsrechner (ZTR) dazu ausgelegt ist, eine Objektart zu erfassen und wobei der zentrale Trainingsrechner (ZTR) dazu ausgelegt ist, ein Vortraining ausschließlich mit synthetisch erzeugten Objektdaten auszuführen, die mittels eines geometrischen, objektart-spezifischen 3D-Modells der Objekte generiert werden und wobei als Ergebnis des Vortrainings Vortrainingsparameter eines vortrainierten ANN über eine Netzwerkschnittstelle (NS) an zumindest eine lokale Recheneinheit (LRE) übermittelt werden und wobei der zentrale Trainingsrechner (ZTR) weiterhin dazu ausgelegt ist, kontinuierlich und zyklisch ein Nachtraining des neuronalen Netzwerks (ANN) auszuführen und als Ergebnis des Nachtrainings Nachtrainingsparameter eines nachtrainierten neuronalen Netzwerks (ANN) über die Netzwerkschnittstelle (NS) an zumindest eine lokale Recheneinheit (LRE) zu übermitteln;

- Eine Menge von lokalen Ressourcen, die über ein lokales Netzwerk (LNW) interagieren, umfassend:

  ◦ Den Roboter (R) mit einer Robotersteuerung (RS), einem Manipulator (M) und der Endeffektoreinheit (EE), wobei die Robotersteuerung (RS) zur Ansteuerung des Roboters (R) und insbesondere seiner Endeffektoreinheit (EE) zur Ausführung der Greifaufgabe für jeweils ein Objekt (O) der jeweiligen Objektart bestimmt ist;

  ◦ Eine optische Erfassungseinrichtung (K), die zum Erfassen von Bilddaten von Objekten im Arbeitsbereich (FB, B, T) des Roboters (R) dient;

  ◦ zumindest eine lokale Recheneinheit (LRE) zur Interkation mit der Robotersteuerung (RS), wobei die zumindest eine lokale Recheneinheit (LRE) bestimmt ist, unterschiedliche Instanzen des neuronalen Netzwerks (ANN) zu speichern, indem die zumindest eine lokale Recheneinheit (LRE) bestimmt ist, von dem zentralen Trainingsrechner (ZTR) Vortrainingsparameter und Nachtrainingsparameter zu empfangen, um insbesondere ein vortrainiertes ANN zu implementieren, das kontinuierlich und zyklisch durch ein nachtrainiertes neuronales Netzwerk (ANN) ersetzt wird, bis ein Konvergenzkriterium erfüllt ist, und

  ◦ wobei das vortrainierte oder nachtrainierte neuronale Netzwerk (ANN) in einer Inferenzphase auf der lokalen Recheneinheit (LRE) angewendet wird, indem aus den mit der optischen Erfassungseinrichtung (K) erfassten Bilddaten ein Ergebnisdatensatz (100) bestimmt wird, der dazu dient, die Greifinstruktionen für die Endeffektoreinheit (EE) zum Greifen des Objektes (O) zu berechnen und diese an die Robotersteuerung (RS) zur Ausführung zu übermitteln;

  ◦ wobei auf der lokalen Recheneinheit (LRE) ein modifizierter ICP-Algorithmus (A2) ausgeführt wird, der als Eingangsdaten erstens die Bilddaten der optischen Erfassungseinrichtung (K), die dem implementierten neuronalen Netzwerk (ANN) zur Anwendung zugeführt wurden und zweitens Referenzbilddaten auswertet und gegeneinander abgleicht, um die Fehler zu minimieren und, um einen verfeinerten Ergebnisdatensatz (200) zu erzeugen, wobei die Referenzbilddaten ein synthetisiertes, gerendertes Bild sind, das zu dem von dem neuronalen Netzwerk (ANN) bestimmten Ergebnisdatensatz (100) auf Basis des 3D-Modells gerendert wird;

  ◦ und wobei der verfeinerte Ergebnisdatensatz (200) als Nachtrainingsdatensatz dient und an den zentralen Trainingsrechner zum Zwecke des Nachtrainings übermittelt wird;

- Die Netzwerkschnittstelle (NW) zum Datenaustausch zwischen dem zentralen Trainingsrechner (ZTR) und der Menge von lokalen Recheneinheiten (LRE), wobei der Datenaustausch über ein asynchrones Protokoll erfolgt.

2. System nach Anspruch 1, bei dem die Netzwerkschnittstelle dazu dient, Parameter zur Instanziierung des vortrainierten oder nachtrainierten neuronalen Netzwerks (ANN) von dem zentralen Trainingsrechner (ZTR) an die zumindest eine lokale Recheneinheit (LRE) zu übermitteln, und/oder wobei die Netzwerkschnittstelle (NS) dazu dient, den auf der zumindest einen lokalen Recheneinheit (LRE) erzeugten verfeinerten Ergebnisdatensatz (200) an den zentralen Trainingsrechner (ZTR) zum Nachtraining zu übermitteln und/oder wobei die Netzwerkschnittstelle (NS) dazu dient, das geometrische, objektart-spezifische 3D-Modell auf der lokalen Recheneinheit (LRE) zu laden.

3. System nach einem der vorangehenden Ansprüche, bei dem auf der lokalen Recheneinheit (LRE) aus den mit der optischen Erfassungseinrichtung (K) lokal erfassten Bilddaten, die dem neuronalen Netzwerk (ANN) zugeführt wurden und synthetisierten Referenzbilddaten mittels eines Annotationsalgorithmus (A3) annotierte Nachtrainingsdaten erzeugt werden, die zum Zwecke des Nachtrainings an den zentralen Trainingsrechner (ZTR) übermittelt werden, wobei die synthetisierten Referenzbilddaten ein synthetisiertes, gerendertes Bild sind, das zu dem von dem neuronalen Netzwerk (ANN) bestimmten Ergebnisdatensatz (100) auf Basis des 3D-Modells gerendert wird.

4. System nach einem der vorangehenden Ansprüche, bei dem das System eine Benutzerschnittstelle (UI) aufweist, die dazu bestimmt ist, zumindest ein Auswahlfeld bereitzustellen, um eine Objektart der zu greifenden Objekte (O) zu bestimmen und wobei die bestimmte Objektart an den zentralen Trainingsrechner (ZTR) übermittelt wird, so dass der zentrale Trainingsrechner (ZTR) in Antwort auf die bestimmte Objektart das objektart-spezifische 3D-Modell aus einem Modellspeicher (MEM-M) lädt, um mittels eines Synthesealgorithmus (A1), objektart-spezifische Bilder in allen physikalisch plausiblen Lagen und/oder Orientierungen zu synthetisieren, die als Grundlage für das Vortraining des neuronalen Netzwerks (ANN) dienen.

5. System nach einem der vorangehenden Ansprüche, bei dem das neuronale Netzwerk (ANN) eine Votenet-Architektur aufweist, die drei Module umfasst, erstens ein Backbone zum Lernen von lokalen Merkmalen, zweitens einem Auswertemodul zur Auswertung und/oder Akkumulation der einzelnen Merkmalsvektoren und drittens ein Umwandlungsmodul, das dazu bestimmt ist, ein Ergebnis der Akkumulation in Objektdetektionen umzuwandeln.

6. System nach einem der vorangehenden Ansprüche, bei dem die Netzwerkschnittstelle (NS) Synchronisationsmittel mit einem Broker umfasst, der als Microservice implementiert ist.

7. System nach einem der vorangehenden Ansprüche, bei dem der Datenaustausch zwischen den lokalen Ressourcen und dem zentralen Trainingsrechner (ZTR) ausschließlich über die lokale Recheneinheit (LRE) erfolgt, die als Gateway dient.

8. System nach einem der vorangehenden Ansprüche, bei dem die Greifinstruktionen einen Identifikationsdatensatz umfassen, der dazu dient, zumindest einen für das Objekt geeigneten Endeffektor aus einer Menge von Endeffektoren der Endeffektoreinheit (EE) zu identifizieren.

9. System nach einem der vorangehenden Ansprüche, bei dem die optische Erfassungseinrichtung eine Einrichtung zur Erfassung von Tiefenbildern und optional zur Erfassung von Intensitätsbildern im sichtbaren oder im Infrarotspektrum ist oder umfasst.

10. System nach dem unmittelbar vorangehenden Anspruch, bei dem die berechneten Greifinstruktionen einem Visualisierungsalgorithmus zugeführt werden, der dazu dient, eine virtualisierte Visualisierung der Greifinstruktionen zu berechnen, die die bestimmten Greifer beim Greifen des Objektes zeigen, wobei die berechnete virtualisierte Visualisierung der Greifinstruktionen auf einer Benutzerschnittstelle ausgegeben wird.

11. System nach einem der vorangehenden Ansprüche, bei dem das Nachtraining des neuronalen Netzwerks (ANN) iterativ und zyklisch im Anschluss an eine Übertragung von Nachtrainingsdaten in Form von verfeinerten Ergebnisdatensätzen erfolgt, die lokal von der optischen Erfassungseinrichtung erfasste Bilddaten umfassen, die automatisch annotiert sind und die von der lokalen Recheneinheit (LRE) an den zentralen Trainingsrechner (ZTR) übermittelt worden sind.

12. System nach einem der vorangehenden Ansprüche, bei dem ein Nachtrainingsdatensatz zum Nachtraining des neuronalen Netzwerks (ANN) schrittweise und kontinuierlich erweitert wird durch sensorisch an den lokalen Ressourcen des Roboters erfasste Bilddaten.

13. Betriebsverfahren zum Betreiben eines Systems nach einem der vorangehenden Ansprüche, mit folgenden Verfahrensschritten:

   - Auf dem zentralen Trainingsrechner (ZTR): Einlesen (S1) einer Objektart;
   - Auf dem zentralen Trainingsrechner (ZTR): Zugreifen (S2) auf einen Modellspeicher (MEM-M), um das für die erfasste Objektart zugeordnete 3D-Modell, insbesondere CAD-Modell, zu laden und daraus synthetische Objektdaten zu erzeugen (S3) und zum Zwecke des Vortrainings zu verwenden;
   - Auf dem zentralen Trainingsrechner (ZTR): Vortraining (S4) eines neuronalen Netzwerkes (ANN) mit den erzeugten synthetischen Objektdaten;
   - Auf dem zentralen Trainingsrechner (ZTR): Bereitstellen (S5) von Vortrainingsparametern;
   - Auf dem zentralen Trainingsrechner (ZTR): Übermitteln (S6) der Vortrainingsparameter über die Netzwerkschnittstelle (NS) an die zumindest eine lokale Recheneinheit (LRE);
   - Auf der zumindest einen lokalen Recheneinheit (LRE): Einlesen (S7) von Vortrainingsparametern oder Nachtrainingsparametern eines vortrainierten oder nachtrainierten neuronalen Netzwerks (ANN) über die Netzwerkschnittstelle (NS), um das vortrainierte oder nachtrainierte neuronale Netzwerk (ANN) zu implementieren (S8);
   - Auf der zumindest einen lokalen Recheneinheit (LRE): Erfassen (S9) von Bilddaten;
   - Auf der zumindest einen lokalen Recheneinheit (LRE): Anwenden (S10) des vortrainierten oder nachtrainierten neuronalen Netzwerks (ANN) mit den erfassten Bilddaten, um den Ergebnisdatensatz (100) zu bestimmen (S11);
   - Auf der zumindest einen lokalen Recheneinheit (LRE): Ausführen (S12) eines modifizierten ICP-Algorithmus (A2), der als Eingangsdaten erstens die Bilddaten der optischen Erfassungseinrichtung (K), die dem implementierten neuronalen Netzwerk (ANN) zur Anwendung zugeführt wurden und zweitens Referenzbilddaten auswertet und gegeneinander abgleicht, um die Fehler zu minimieren und um einen verfeinerten Ergebnisdatensatz (200) zu erzeugen (S13), wobei die Referenzbilddaten ein synthetisiertes, gerendertes Bild sind, das zu dem von dem neuronalen Netzwerk (ANN) bestimmten Ergebnisdatensatz (100) auf Basis des 3D-Modells gerendert wird;

- Auf der zumindest einen lokalen Recheneinheit (LRE): Berechnen (S14) von Greifinstruktionen für die Endeffektoreinheit (EE) des Roboters (R) auf Basis des erzeugten verfeinerten Ergebnisdatensatzes (200);
- Auf der zumindest einen lokalen Recheneinheit (LRE): Datenaustausch (S15) mit der Robotersteuerung (RS) zum Ansteuern der Endeffektoreinheit (EE) des Roboters (R) mit den erzeugten Greifinstruktionen;
- Auf der zumindest einen lokalen Recheneinheit (LRE): Erzeugen (S16) von Nachtrainingsdaten, wobei der verfeinerte Ergebnisdatensatz (200) als Nachtrainingsdatensatz dient und an den zentralen Trainingsrechner (ZTR) zum Zwecke des Nachtrainings übermittelt (S17) wird;
- Auf dem zentralen Trainingsrechner (ZTR): Erfassen (S18) der Nachtrainingsdaten über die Netzwerkschnittstelle (NS), wobei die Nachtrainingsdaten die gelabelten realen Bilddaten umfassen, die mit der optischen Erfassungseinrichtung (K) erfasst worden sind;
- Auf dem zentralen Trainingsrechner (ZTR): Kontinuierliches und zyklisches Nachtraining (S19) des neuronalen Netzwerkes (ANN) mit den erfassten Nachtrainingsdaten bis ein Konvergenzkriterium erfüllt ist zum Bereitstellen (S20) von Nachtrainingsparametern;
- Auf dem zentralen Trainingsrechner (ZTR): Übermitteln (S21) der Nachtrainingsparameter über die Netzwerkschnittstelle (NS) an die zumindest eine lokale Recheneinheit (LRE).

14. Zentrales Betriebsverfahren zum Betreiben eines zentralen Trainingsrechners (ZTR) in einem System gemäß einem der vorangehenden Patentansprüche 1 bis 12, mit folgenden Verfahrensschritten:

- Einlesen (S1) einer Objektart;
- Zugreifen (S2) auf den Modellspeicher (MEM-M), um das für die erfasste Objektart zugeordnete 3D-Modell, insbesondere CAD-Modell, zu laden und daraus synthetische Objektdaten zu erzeugen (S3) und zum Zwecke des Vortrainings zu verwenden;
- Vortraining (S4) eines neuronalen Netzwerkes (ANN) mit den erzeugten synthetischen Objektdaten, die als Vortrainingsdaten dienen, zum Bereitstellen (S5) von Vortrainingsparametern,
- Übermitteln (S6) der Vortrainingsparameter über die Netzwerkschnittstelle (NS) an die zumindest eine lokale Recheneinheit (LRE);
- Erfassen (S18) von Nachtrainingsdaten über die Netzwerkschnittstelle (NS), wobei die Nachtrainingsdaten einen verfeinerten Ergebnisdatensatz (200) umfassen, auf Basis von mit der optischen Erfassungseinrichtung (K) erfassten Bilddaten, die in einem automatischen Verfahren annotiert werden;
- Kontinuierliches und zyklisches Nachtraining (S19) des neuronalen Netzwerkes (ANN) mit den erfassten Nachtrainingsdaten bis ein Konvergenzkriterium erfüllt ist zum Bereitstellen (S20) von Nachtrainingsparametern;
- Übermitteln (S21) der Nachtrainingsparameter über die Netzwerkschnittstelle (NS) an die zumindest eine lokale Recheneinheit (LRE).

15. Zentrales Betriebsverfahren nach dem unmittelbar vorangehenden Verfahrensanspruch, bei dem die Schritte Erfassen (S18) von Nachtrainingsdaten, Nachtraining (S19), Bereitstellen (S20) und Übermitteln (S21) der Nachtrainingsparameter iterativ auf Basis von neu erfassten Nachtrainingsdaten ausgeführt werden.

16. Lokales Betriebsverfahren zum Betreiben von einer lokalen Recheneinheit (LRE) in einem System gemäß einem der vorangehenden Patentansprüche 1 bis 12, mit:

- Einlesen (S7) von Vortrainingsparametern oder Nachtrainingsparametern eines vortrainierten oder nachtrainierten ANN über die Netzwerkschnittstelle (NS), um das vortrainierte oder nachtrainierte neuronale Netzwerk (ANN) zu implementieren (S8);
- Erfassen (S9) von Bilddaten mit der optischen Erfassungseinrichtung (K) von den Objekten im Arbeitsbereich (FB, B, T) des Roboters (R);
- Anwenden (S10) des vortrainierten oder nachtrainierten neuronalen Netzwerkes (ANN) mit den erfassten Bilddaten, um den jeweiligen Ergebnisdatensatz (100) für die in den Bilddaten abgebildeten Objekte zu bestimmen (S11);
- Ausführen (S12) eines modifizierten ICP-Algorithmus (A2), der als Eingangsdaten erstens die Bilddaten der optischen Erfassungseinrichtung (K), die dem implementierten neuronalen Netzwerk (ANN) zur Anwendung zugeführt wurden und zweitens Referenzbilddaten auswertet und gegeneinander abgleicht, um die Fehler zu minimieren und, um einen verfeinerten Ergebnisdatensatz (200) zu erzeugen (S13), wobei die Referenzbilddaten ein synthetisiertes, gerendertes Bild sind, das zu dem vom neuronalen Netzwerk (ANN) bestimmten Ergebnisdatensatz (100) auf Basis des 3D-Modells gerendert wird;
- Berechnen (S14) von Greifinstruktionen zur Anwendung auf der Endeffektoreinheit (EE) des Roboters (R) auf Basis des erzeugten verfeinerten Ergebnisdatensatzes (200);
- Datenaustausch (S15) mit der Robotersteuerung (RS) zum Ansteuern der Endeffektoreinheit (EE) des Roboters (R)mit den erzeugten Greifinstruktionen
- Erzeugen (S16) von Nachtrainingsdaten, wobei der erzeugte verfeinerte Ergebnisdatensatz (200) als Nachtrainingsdatensatz dient und an den zentralen Trainingsrechner (ZTR) zum Zwecke des Nachtrainings übermittelt (S17) wird.

17. Lokales Betriebsverfahren nach dem unmittelbar vorangehenden Anspruch, wobei das Erfassen der Bilddaten für das jeweilige Objekt vor Ausführung der Greifinstruktionen des Objektes ausgelöst wird.

18. Lokales Betriebsverfahren nach einem der Ansprüche 16 oder 17, bei dem bei Anwendung des vortrainierten neuronalen Netzwerkes (ANN) in einer Vortrainingsphase die Objekte unter Einhaltung von Restriktionsbedingungen, insbesondere auf einer Ebene und disjunkt in dem Arbeitsbereich (FB, B, T), angeordnet sind und bei dem bei Anwendung des nachtrainierten neuronalen Netzwerkes (ANN) die Objekte in dem Arbeitsbereich (FB, B, T) ohne Einhaltung von Restriktionsbedingungen angeordnet sind.

19. Zentraler Trainingsrechner (ZTR) in einem verteilten System nach den Ansprüche 1 bis 12, mit einem Speicher, auf dem eine Instanz eines neuronalen Netzwerkes (ANN) gespeichert ist, wobei der zentrale Trainingsrechner (ZTR) zum Vortraining und zum Nachtraining des neuronalen Netzwerkes (ANN) bestimmt ist, das zur Objekterkennung und zur Lageerfassung, einschließlich einer Erfassung einer Orientierung des Objektes (O) trainiert ist, um Greifinstruktionen für eine Endeffektoreinheit (EE) des Roboters (R) zum Greifen des jeweiligen Objektes (O) zu berechnen;

wobei der zentrale Trainingsrechner (ZTR) dazu ausgelegt ist, eine Objektart zu einzulesen und
wobei der zentrale Trainingsrechner (ZTR) eine Modellschnittstelle (MS) zu einem Modellspeicher (MEM-M) aufweist, in dem zu jeweils einer Objektart ein geometrisches 3D-Modell der Objekte der Objektart hinterlegt ist und
wobei der zentrale Trainingsrechner (ZTR) dazu ausgelegt ist, ein Vortraining ausschließlich mit synthetisch erzeugten Vortrainingsdaten auszuführen, die mittels des geometrischen, objektart-spezifischen 3D-Modells der Objekte der erfassten Objektart generiert werden und wobei als Ergebnis des Vortrainings Vortrainingsparameter eines vortrainierten neuronalen Netzwerkes (ANN) über eine Netzwerkschnittstelle (NS) an zumindest eine lokale Recheneinheit (LRE) übermittelt werden und
wobei der zentrale Trainingsrechner (ZTR) weiterhin dazu ausgelegt ist, kontinuierlich und zyklisch ein Nachtraining des vortrainierten neuronalen Netzwerkes (ANN) auf Basis von Nachtrainingsdaten auszuführen und als Ergebnis des Nachtrainings Nachtrainingsparameter eines nachtrainierten neuronalen Netzwerkes (ANN) über die Netzwerkschnittstelle (NS) an die zumindest eine lokale Recheneinheit (LRE) zu übermitteln.

20. Lokale Recheneinheit (LRE) in einem verteilten System nach den Ansprüche 1 bis 12, wobei die lokale Recheneinheit (LRE) zum Datenaustausch mit einer Steuerung (RS) des Roboters (R) zum Ansteuern des Roboters (R) und insbesondere seiner Endeffektoreinheit (EE) zur Ausführung der Greifaufgabe für jeweils ein Objekt (O) bestimmt ist, und

wobei lokale Recheneinheit (LRE) bestimmt ist, unterschiedliche Instanzen des neuronalen Netzwerkes (ANN) zu speichern, indem die lokale Recheneinheit (LRE) bestimmt ist, von dem zentralen Trainingsrechner (ZTR) Vortrainingsparameter und Nachtrainingsparameter zu empfangen, um insbesondere ein vortrainiertes neuronales Netzwerk (ANN) zu implementieren, das kontinuierlich und zyklisch durch ein nachtrainiertes neuronales Netzwerk (ANN) ersetzt wird, bis ein Konvergenzkriterium erfüllt ist, und
wobei das vortrainierte oder nachtrainierte neuronale Netzwerk (ANN) in einer Inferenzphase angewendet wird, indem zu den mit der optischen Erfassungseinrichtung (K) erfassten Bilddaten, ein Ergebnisdatensatz (100) bestimmt wird,
und wobei ein modifizierter ICP-Algorithmus (A2) ausgeführt wird, der als Eingangsdaten erstens die Bilddaten der optischen Erfassungseinrichtung (K), die dem implementierten neuronalen Netzwerk (ANN) zur Anwendung zugeführt wurden und zweitens Referenzbilddaten auswertet und gegeneinander abgleicht, um die Fehler zu minimieren und, um einen verfeinerten Ergebnisdatensatz (200) zu erzeugen, wobei die Referenzbilddaten ein synthetisiertes, gerendertes Bild sind, das zu dem von dem neuronalen Netzwerk (ANN) bestimmten Ergebnisdatensatz (100) auf Basis des 3D-Modells gerendert wird und, wobei der verfeinerte Ergebnisdatensatz (200) als Grundlage dient, die Greifinstruktionen für die Endeffektoreinheit (EE) zum Greifen des Objektes (O) zu berechnen und diese an die Robotersteuerung (RS) des Roboters (R) zur Ausführung der Greifaufgabe zu übermitteln.

21. Lokale Recheneinheit (LRE) nach dem unmittelbar vorangehenden Anspruch, bei dem die lokale Recheneinheit (LRE) eine Graphics Processing Unit (GPU) umfasst, die dazu dient, das neuronale Netzwerk (ANN) zu implementieren.

FIG. 1

EP 4 177 013 A1

Lokale Ressourcen

ZTR — Zentrale Recheneinheit

Actor

Lokale Recheneinheit — LRE

Kamera — K

Roboter — R

A1 — 3D Modell

Stabile Zustände

Griffe definieren

Griffe übertragen

A1 — Vortraining starten

Rendering

Synthetisierte Objektdaten

Vortraining

Vortrainingsparameter/ Gewichte übertragen

Produktdaten laden 3D Modell

Finde Objekte

Trigger Bildaufnahme

Tiefen- ggf. Intensitätsbild aufnehmen

Bilddaten

Bilddaten übertragen

Votenet, S10

100, Ergebnisdatensatz

Feinlokalisierung mittels ICP, A2

Greifposition = 200, verfeinerter Ergebnisdatensatz

Bewegung ausführen

A3

Iterativ

Nachtraining (Nachtrainingsdaten)

Positionsdaten 200 übertragen

Nachtrainingsparameter/Gewichte übertragen

# FIG. 2

ZTR

MEM-M

NS

lokale Ressourcen

LRE

K

RS

R

M

EE

LNW

EP 4 177 013 A1

# FIG. 3

# FIG. 4

FIG. 5

# FIG. 6

# FIG. 7

START → S1 → S2 → S3 → S4 → S5 → S6    ] ZTR

S12 ← S11 ← S10 ← S9 ← S8 ← S7

S13 → S14 → S15 → S16 → S17    ] LRE

ENDE ← S21 ← S20 ← S19 ← S18    ] ZTR

EP 4 177 013 A1

# FIG. 8

ZTR

START → S1 → S2 → S3 → S4 → S5 → S6

ENDE ← S21 ← S20 ← S19 ← S18

EP 4 177 013 A1

# FIG. 9

EP 4 177 013 A1

LRE

START → S7 → S8 → S9 → S10 → S11 → S12

ENDE ← S17 ← S16 ← S15 ← S14 ← S13

FIG. 11

# FIG. 12

[Prozess Start]

[Initiales Training abgeschlossen?]

Platziere Teil auf Ebene    [nein]    [ja]    Platziere Teile in Kiste

Bildaufnahme (2D/3D)

Auswertung durch ANN

Speichern Bilddaten ◄ - - - annotierte Bilddaten

Verfeinerung mit ICP

Synchronisation Bilddaten

Filtern anhand ICP-Residuum

[Prozess läuft]

[Prozess Ende]

Auswahl Griff

[0 Detektionen]

Griff in Roboterkoordinaten    Speichern Label ◄ - - - - - in Form von verfeinertem Ergebnisdatensatz, 200

Synchronisation Label

[>0 Detektionen]

Abholen mit Roboter

EP 4 177 013 A1

38

# FIG. 13

[Prozess Start]

[Initiales Training abgeschlossen?]

Suche stabile Lagen

[nein]   [ja]

[Registrierte Intensitätsbilder vorhanden?]

Synthese von Tiefenbildern

[nein]   [ja]

Aggregation Tiefenbilder

Aggregation Tiefen/Intensitätsbilder

Nachtraining

Training

Training mit erweiterter Kinematik

Nachtraining

Synchronisation

[Prozess Ende]

FIG. 14

FIG. 15

# EUROPÄISCHER RECHERCHENBERICHT

Europäisches Patentamt
European Patent Office
Office européen des brevets

**Nummer der Anmeldung**

EP 21 20 6501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/228495 A1 (TREMBLAY JONATHAN [US] ET AL) 25. Juli 2019 (2019-07-25) * Zusammenfassung * * Abbildungen 1, 5 * * Absätze [0019] – [0113] * ----- | 1-21 | INV. B25J9/16 G06N3/08 G06N20/00 |
| A | KEHOE BEN ET AL: "Cloud-based robot grasping with the google object recognition engine", 2013 IEEE INTERNATIONAL CONFERENCE ON ROBOTICS AND AUTOMATION (ICRA); 6-10 MAY 2013; KARLSRUHE, GERMANY, IEEE, US, 6. Mai 2013 (2013-05-06), Seiten 4263-4270, XP032505971, ISSN: 1050-4729, DOI: 10.1109/ICRA.2013.6631180 ISBN: 978-1-4673-5641-1 [gefunden am 2013-10-13] * Zusammenfassung * * Abbildungen 2,3 * * Abschnitte IV-V * ----- | 1-21 | |
| A | KITAGAWA SHINGO ET AL: "Multi-Stage Learning of Selective Dual-Arm Grasping Based on Obtaining and Pruning Grasping Points Through the Robot Experience in the Real World", 2018 IEEE/RSJ INTERNATIONAL CONFERENCE ON INTELLIGENT ROBOTS AND SYSTEMS (IROS), IEEE, 1. Oktober 2018 (2018-10-01), Seiten 7123-7130, XP033490995, DOI: 10.1109/IROS.2018.8593752 [gefunden am 2018-12-27] * Zusammenfassung * * Abbildungen 2,3 * * Abschnitte II-VI * ----- -/-- | 1-21 | **RECHERCHIERTE SACHGEBIETE (IPC)** B25J G05B G06N |

Der vorliegende Recherchenbericht wurde für alle Patentansprüche erstellt

| Recherchenort | Abschlußdatum der Recherche | Prüfer |
|---|---|---|
| Den Haag | 7. April 2022 | Hageman, Elodie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

Europäisches
Patentamt

European
Patent Office

Office européen
des brevets

**EUROPÄISCHER RECHERCHENBERICHT**

**Nummer der Anmeldung**

**EP 21 20 6501**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2020/190166 A1 (PUBLICHNOE AKTSIONERNOE OBSHCHESTVO SBERBANK RUSSIA [RU]) 24. September 2020 (2020-09-24) * Zusammenfassung * * Abbildung 1 * * Absätze [0036] – [0081] * ----- | 1-21 | |
| A | DE 10 2020 128653 A1 (NVIDIA CORP [US]) 20. Mai 2021 (2021-05-20) * Zusammenfassung * * Abbildungen 1, 2, 10A, 10B, 11 * * Absätze [0004] – [0554] * ----- | 1-21 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 7. April 2022 | Hageman, Elodie |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
    Dokument

EPO FORM 1503 03.82 (P04C03)

**Seite 2 von 2**

**EP 4 177 013 A1**

## ANHANG ZUM EUROPÄISCHEN RECHERCHENBERICHT
## ÜBER DIE EUROPÄISCHE PATENTANMELDUNG NR.

EP 21 20 6501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2022

| Im Recherchenbericht angeführtes Patentdokument | Datum der Veröffentlichung | Mitglied(er) der Patentfamilie | Datum der Veröffentlichung |
|---|---|---|---|
| US 2019228495 A1 | 25-07-2019 | US 2019228495 A1<br>US 2021390653 A1 | 25-07-2019<br>16-12-2021 |
| WO 2020190166 A1 | 24-09-2020 | EA 201990572 A1<br>RU 2700246 C1<br>WO 2020190166 A1 | 30-09-2020<br>20-09-2019<br>24-09-2020 |
| DE 102020128653 A1 | 20-05-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LOWE, D.G.** Distinctive Image Features from Scale-Invariant Keypoints. *International Journal of Computer Vision,* 2004, vol. 60, 91-110
- **C. R. QI ; O. LITANY ; K. HE ; L. GUIBAS.** Deep Hough Voting for 3D Object Detection in Point Clouds,. *2019 IEEE/CVF International Conference on Computer Vision (ICCV),* 2019, 9276-9285
- **KINGMA, DIEDERIK P. ; JIMMY BA.** Adam: A method for stochastic optimization. *arXiv:1412.6980,* 2014
- Method for registration of 3-D shapes. **BESL, PAUL J. ; NEIL D. MCKAY.** Sensor fusion IV: control paradigms and data structures. International Society for Optics and Photonics, 1992, vol. 1611, 586-606
- **KLEEBERGER, K. ; BORMANN, R. ; KRAUS, W. et al.** A Survey on Learning-Based Robotic Grasping. *Curr Robot Rep,* 2020, vol. 1, 239-249